(19) Europäisches Patentamt
European Patent Office
Office européen des brevets

(11) EP 0 697 656 B1

(12) **FASCICULE DE BREVET EUROPEEN**

(45) Date de publication et mention de la délivrance du brevet:
**01.03.2000 Bulletin 2000/09**

(51) Int Cl.^7: **G06F 9/46**

(21) Numéro de dépôt: **95401848.7**

(22) Date de dépôt: **07.08.1995**

(54) **Procédé pour ordonnancer des tâches successives**

Verfahren für die Ablauffolgeplanung von aufeinanderfolgenden Aufgaben

Scheduling method for successive tasks

(84) Etats contractants désignés:
**AT BE CH DE DK ES GB IT LI NL SE**

(30) Priorité: **11.08.1994 FR 9409951**

(43) Date de publication de la demande:
**21.02.1996 Bulletin 1996/08**

(73) Titulaire: **CEGELEC**
**92309 Levallois-Perret (FR)**

(72) Inventeur: **Dworzecki, Jozef**
**F-78330 Fontenay le Fleury (FR)**

(74) Mandataire: **Gosse, Michel et al**
**ALSTOM France SA**
**Service de Propriété Industrielle**
**c/o CEGELEC**
**5, Avenue Newton**
**92142 Clamart Cédex (FR)**

(56) Documents cités:
- **IEEE TRANSACTIONS ON SOFTWARE ENGINEERING, vol.SE-13, no.5, Mai 1987, NEW YORK US pages 564 - 576 WEI ZHAO ET AL.: 'Scheduling Tasks with Resource Requirements in Hard Real-Time Systems'**
- **REAL TIME SYSTEMS, vol.1, no.1, Juin 1989, DORDRECHT, NL pages 27 - 60 BRINKLEY SPRUNT ET AL. : 'Aperiodic Task Scheduling for Hard-Real-Time Systems'**
- **PROCEEDINGS OF THE IEEE, vol.82, no.1, Janvier 1994, NEW YORK, US pages 55 - 67 KRITHI RAMAMRITHAM ET AL.: 'Scheduling Algorithms and Operating Systems Support for Real-Time Systems'**
- **PROCEEDINGS OF THE REAL-TIME SYSTEMS SYMPOSIUM, 2 Décembre 1986, NEW ORLEANS, USA pages 166 - 174 S. CHENG ET AL. : 'Dynamic Scheduling of Groups of Tasks with Precedence Constraints in Distributed Hard Real-Time Systems'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 697 656 B1

Printed by Jouve, 75001 PARIS (FR)

## Description

L'invention concerne un procédé pour ordonnancer des tâches successives, au moyen d'un ordinateur, en déterminant un ordre d'exécution de ces tâches et un instant de début d'exécution pour chaque tâche, deux tâches ne devant jamais être exécutées simultanément. Cet ordonnancement est réalisé en fonction d'une pluralité de contraintes que doivent satisfaire les tâches. Ce procédé concerne plus particulièrement les applications où il y a deux types de contrainte :

- Des contraintes de succession : une tâche doit être exécutée après une ou plusieurs autres tâches prédéterminées.
- Des contraintes de délais : l'exécution d'une tâche doit commencer à un instant compris dans au moins un intervalle de temps prédéterminé. Cet intervalle est généralement déterminé par rapport à l'instant de début d'exécution d'une tâche qui doit précéder immédiatement la tâche considérée, ou par rapport à un instant de référence absolue. Une tâche qui précède immédiatement la tâche considérée est appelée tâche prédécesseur. Le nombre de tâches prédécesseurs n'est pas limité.

Le procédé selon l'invention est applicable notamment à des tâches qui doivent être exécutées successivement parce qu'elles sont exécutées par un moyen unique capable de n'exécuter qu'une seule tâche à la fois, par exemple : une machine outil, un bus informatique, ou une équipe de travailleurs. Dans le domaine de l'informatique, il peut être appliqué à la gestion d'une pluralité de tâches prédéterminées à exécuter successivement dans un même processeur ou sur un même bus. Dans le domaine du contrôle-commande industriel, il peut être appliqué notamment à la gestion d'un bus dit de terrain, utilisé pour transmettre des informations successivement selon un ordonnancement prédéterminé.

De nombreux procédés d'ordonnancement sont déjà connus :

- les méthodes dites pôlynomiales ou de circuits critiques;
- les méthodes de programmation linéaire, notamment la méthode du simplex, sur laquelle est fondée le langage PROLOG III;
- les méthodes de programmation dynamique, qui ne peuvent être appliquées qu'à des problèmes de taille assez faible;
- et les méthodes heuristiques, qui utilisent certains algorithmes des méthodes citées ci-dessus, mais qui consistent en outre à réduire le nombre de cas à vérifier, en simplifiant certaines contraintes; la solution obtenue étant alors non optimale.

Les procédés connus ont deux inconvénients : ils nécessitent une durée de calcul importante parce qu'ils vérifient systématiquement un très grand nombre de permutations avant de fournir une solution. La durée de calcul est généralement proportionnelle à la fonction factorielle du nombre de tâches à ordonnancer.

Pour ordonnancer des tâches répétitives, les procédés connus déterminent la durée d'un macro-cycle égal au plus petit commun multiple de toutes les périodes des tâches, et déterminent la durée d'un micro-cycle égal au plus grand commun diviseur de toutes les périodes des tâches, puis ils cherchent une permutation des tâches telle que toutes les contraintes soient satisfaites simultanément, en essayant toutes les permutations possibles jusqu'à en trouver une vérifiant cette condition, en faisant les vérifications micro-cycle par micro-cycle. Lorsqu'un conflit apparaît dans un micro-cycle la permutation en cours de vérification est abandonnée, et une autre est essayée. Le travail effectué pour la vérification de cette permutation pendant les micro-cycles précédents devient inutile parce que toutes les contraintes satisfaites précédemment sont remises en cause.

Les procédés connus sont donc peu pratiques à mettre en oeuvre dans des applications industrielles.

Le but de l'invention est de proposer un procédé d'ordonnancement qui n'ait pas ces inconvénients, afin d'obtenir plus rapidement une solution à un problème d'ordonnancement statique, mais aussi pour permettre de traiter des problèmes d'ordonnancement dynamique, c'est-à-dire redéterminer un ordonnancement au fur et à mesure de l'évolution du nombre de tâches à ordonnancer et de l'évolution des contraintes portant sur ces tâches. Un tel ordonnancement dynamique peut être utile par exemple pour ordonnancer des tâches d'usinage sur une machine outil, lorsque les produits à fabriquer sont très diversifiés; pour ordonnancer les décollages ou les atterrissages d'avions sur une piste d'aéroport; pour ordonnancer des tâches sur un bus ou un processeur informatique; etc.

L'objet de l'invention est un procédé pour ordonnancer des tâches successives au moyen d'un ordinateur, certaines tâches devant satisfaire des contraintes; les contraintes, pour une tâche, consistant en ce que l'instant $t^{K}_{deb}$ de début d'exécution doit être compris dans au moins un intervalle de temps $[t^{k}min, t^{k}max]$ prédéterminé par rapport à l'instant de début d'exécution d'une autre tâche, appellée prédécesseur, dont l'exécution précède celle de la tâche considéré; ou bien prédéterminé par rapport à un instant de référence absolue;

caractérisé en ce qu'il consiste à :

- considérer que toutes les tâches sont répétitives, et à réduire l'intervalle de temps sur lequel l'ordonnancement est à déterminer, en réduisant cet intervalle à un micro-cycle dont la durée est égale au plus grand commun diviseur de toutes les périodes de répétition des tâches; et en recherchant un ordonnancement tel que si toutes les tâches sont exécutées au cours d'un même micro-cycle elles satisfassent toutes les contraintes;
- rassembler les tâches à exécuter, dans des couches en fonction des successions imposées par les contraintes;
- ordonnancer les tâches couche par couche, dans l'ordre des couches de rangs croissants, jusqu'à la dernière couche si c'est possible; et conclure alors que l'ordonnancement obtenu est bon;

en ce que, si aucun ordonnancement de la première couche ne satisfait toutes les contraintes portant sur les tâches de la première couche, il consiste à arrêter l'ordonnancement, et à conclure à un échec;
et en ce que si l'ordonnancement réalisé dans une couche dite courante, qui n'est pas la première couche, ne satisfait pas une contrainte portant sur une tâche appartenant à la couche courante, il consiste à :

- refaire l'ordonnancement d'une couche qui est la couche de rang le plus élevé parmi les couches contenant respectivement les tâches prédécesseurs correspondant aux contraintes non satisfaites, en dicalant l'instant d'exécution de la tâche prédécesseur contenue dans cette couche avec un sens et une durée tels que la contrainte insatisfaite pourra être satisfaite lors d'un réordonnancement ultérieur de la couche courante;
- puis à faire, ou éventuellement refaire, l'ordonnancement de toutes les autres couches ayant un rang supérieur à celui de la couche de la tâche prédécesseur, jusqu'à la dernière couche, si c'est possible, et à conclure alors que l'ordonnancement obtenu est bon.

Le procédé ainsi caractérisé présente l'avantage d'être plus rapide que les procédés connus parce :

1) Les permutations sont vérifiées sur un seul micro-cycle;
2) En cas d'échec pour l'ordonnancement d'une couche du graphe de successions, il consiste à réordonnancer une ou plusieurs couches précédant la couche où l'ordonnancement est un échec, mais sans remettre en cause l'intégralité du travail effectué précédemment.

Ces deux caractéristiques réduisent considérablement le temps de calcul, par rapport aux procédés connus qui explorent systématiquement toutes les possibilités d'ordonnancement, en remettant en cause toutes les contraintes ayant été satisfaites précédemment, lorsqu'une permutation ne satisfait pas une contrainte.
Enfin, ce procédé est applicable à l'ordonnancement d'un système dans lequel plusieurs tâches peuvent être effectivement réalisées en parallèle, en décomposant ce système en plusieurs sous-systèmes parallèles dans lesquels les tâches doivent toutes être exécutées successivement; et en appliquant le procédé selon l'invention pour chacun des sous-systèmes ainsi déterminés.
L'étape consistant à ordonnancer les tâches couche par couche peut être réalisée en mettant en oeuvre un procédé connu tel que l'algorithme du simplex, mais un mode de mise en oeuvre préférentiel, pour ordonnancer chaque couche, consiste à :

- calculer, pour chaque tâche de la couche courante, les bornes $t_{min}$ et $t_{max}$ de l'intervalle où doit commencer l'exécution de cette tâche;
- constituer une première suite dans laquelle toutes les tâches de la couche courante sont ordonnées selon les valeurs de $t_{min}$ croissantes ;
- constituer une seconde suite dans laquelle toutes les tâches de la couche courante sont ordonnées selon les valeurs de $t_{max}$ croissantes;
- constituer une permutation dite initiale, en ordonnançant les tâches de la couche courante dans l'ordre de la première suite;
- vérifier si la permutation initiale satisfait toutes les contraintes portant sur les tâches de la couche courante;
- conclure que l'ordonnancement de la couche courante est un succès si toutes les contraintes sont satisfaites;
- sinon, déterminer dans la permutation initiale la première tâche, dite mal placée, pour laquelle une contrainte n'est pas satisfaite;
- déterminer dans la seconde suite une tâche dite candidate qui précède immédiatement la tâche mal placée, dans cette seconde suite et qui précède aussi la tâche mal placée, dans la permutation courante;
- vérifier que, si la tâche candidate est déplacée dans la permutation courante pour être placée immédiatement après la tâche mal placée, toutes les contraintes portant sur les tâches ainsi déplacées sont alors satisfaites; et

  -- si au moins une contrainte n'est pas satisfaite, conclure que la tâche candidate ne convient pas, puis déterminer dans la seconde suite une autre tâche candidate et réitérer la vérification précédente; et si, ce n'est pas possible, conclure que l'ordonnancement de la couche courante a échoué;

-- si toutes les contraintes sont satisfaites, conclure que l'ordonnancement de la couche courante est un succès.

Le procédé ainsi caractérisé présente l'avantage d'être particulièrement rapide parce qu'en cas d'échec pour l'ordonnancement d'une tâche de cette couche, il consiste à déplacer, à l'intérieur de cette couche, une ou plusieurs tâches précédant la tâche où l'ordonnancement est en échec, sans remettre en cause systématiquement toutes les contraintes déjà satisfaites dans cette couche, et donc sans remettre en cause l'intégralité du travail effectué précédemment dans cette couche. Cette caractéristique réduit considérablement le temps de calcul par rapport à tout procédé qui consisterait à explorer systématiquement toutes les possibilités d'ordonnancement dans cette couche.

Le procédé selon l'invention sera mieux compris et d'autres caractéristiques apparaîtront à l'aide de la description ci-dessous d'un exemple de mise en oeuvre, et des figures l'accompagnant :

- la figure 1 représente le schéma synoptique d'un système dans lequel le procédé selon l'invention est mis en oeuvre pour déterminer dynamiquement un ordonnancement;
- la figure 2 représente le schéma fonctionnel d'un exemple de système de contrôle-commande industriel nécessitant un ordonnancement statique;
- la figure 3 représente le schéma synoptique de ce système de contrôle-commande industriel, comportant un bus de terrain sur lequel des informations sont transmises de manière successive, selon un ordonnancement déterminé en appliquant le procédé selon l'invention;
- les figures 4 et 5 illustrent une étape du procédé selon l'invention, pour prendre en compte le caractère périodique de certaines tâches;
- la figure 6 représente un graphe dit de successions, qui a été déterminé pour l'exemple de système représenté sur les figures 2 et 3;
- la figure 7 représente l'organigramme des étapes d'un exemple de mise en oeuvre du procédé selon l'invention;
- la figure 8 illustre une première étape de l'organigramme représenté sur la figure 7;
- les figures 9 à 12 illustrent les principes de base de l'ordonnancement des tâches à l'intérieur d'une couche du graphe de successions, selon l'invention;
- la figure 13 représente l'organigramme plus détaillé d'une étape E2 de l'organigramme représenté sur la figure 7, réalisant l'ordonnancement des tâches à l'intérieur d'une couche du graphe de successions;
- les figures 14 à 21 représentent des chronogrammes illustrant la mise en oeuvre de l'organigramme représenté sur la figure 11;
- les figures 22 à 31 illustrent la mise en oeuvre de l'organigramme représenté sur la figure 13 pour ordonnancer un exemple de couche.

Le procédé selon l'invention peut être mis en oeuvre aussi bien pour déterminer un ordonnancement statique, que pour déterminer un ordonnancement dynamique. Mais la réduction de la durée de calcul qu'il procure est particulièrement avantageuse pour déterminer un ordonnancement dynamique, puisqu'elle permet de prendre en compte en temps réel des changements de contraintes ou de tâche.

La figure 1 représente le schéma synoptique d'un exemple de dispositif mettant en oeuvre le procédé selon l'invention pour l'ordonnancement dynamique de tâches de production industrielle par exemple.

Ce dispositif comporte un ordinateur OR couplé à un système de production SY. Ce système de production SY fournit à une entrée de l'ordinateur SY les paramètres nécessaires pour déterminer un ordonnancement : l'identité $ID_K$ de chaque tâche, et la période éventuelle $T_K$ de chaque tâche, et la définition $R_L$ de chaque contrainte à satisfaire. Ces paramètres sont fournis chaque fois qu'un changement intervient dans la nature des tâches à exécuter ou dans les contraintes.

L'ordinateur détermine alors une nouvelle permutation PER, et le système de production SY exécute ensuite les tâches conformément à cette nouvelle permutation.

Les tâches sont généralement exécutées par différents dispositifs que comporte le système SY. L'ordinateur OR doit être programmé aussi pour transmettre à chaque dispositif une information lui indiquant les instants où il peut exécuter une tâche. La programmation de l'ordinateur OR pour le mettre en oeuvre le procédé selon l'invention et pour la transmission à chaque dispositif d'une information est à la portée de l'Homme de l'Art, et ne sera pas décrite au-delà de la description du procédé lui-même. De même, les moyens matériels pour coupler un ordinateur OR à un système SY comportant différents dispositifs aptes à réaliser respectivement différentes tâches, est à la portée de l'Homme de l'Art.

Les figures 2 et 3 représentent un système de contrôle-commande industriel nécessitant un ordonnancement statique. Cette application est considérée à titre d'exemle pour mettre en oeuvre le procédé selon l'invention, mais celui-ci n'est pas limité aux applications où l'ordonnancement est statique. Les mêmes étapes permettent de déterminer en temps réel un ordonnancement dynamique.

La figure 2 représente le schéma fonctionnel d'un système de contrôle-commande industriel SY'. Chaque tâche consiste à transmettre une information entre un émetteur et un récepteur, alors que le médium utilisable ne peut porter qu'une seule informatin à la fois. Ce système SY' comporte :

- un circuit d'initialisation C0;
- des capteurs C1, ..., C5;
- des circuits de régulation C6 et C7;
- des actionneurs A1, A3, A4;
- un afficheur A2.

Les échanges d'information sont représentés par des flèches. Le circuit d'initialisation C0 est susceptible d'émettre une information ID1 et une information ID5. Chacun des capteurs C1 à C5 est susceptible d'émettre des informations. Par exemple un capteur C2 est susceptible d'émettre une information ID7 et une information D15. Certains capteurs sont susceptibles de recevoir certaines informations. Par exemple, le capteur C2 est susceptible de recevoir l'information ID6 ou l'information ID8.

Les circuits de régulation C6 et C7 sont eux aussi susceptibles d'émettre et de recevoir des informations. Dans cet exemple, les actionneurs A1, A3, A4 et l'afficheur A2, sont seulement susceptibles de recevoir des informations. Par exemple, l'actionneur A1 est susceptible de recevoir l'information ID7 et l'information ID15 émises par le capteur C2. Par ailleurs, une même information peut être reçue simultanément par plusieurs éléments du système. Par exemple, l'information ID8 fournie par le capteur C1 est reçue simultanément par le capteur C2 et par le circuit de régulation C7.

La figure 3 représente le schéma synoptique de cet exemple de système, pour montrer les liaisons physiques transportant les informations ID1, ..., ID20. Toutes les informations sont transmises par un support unique B qui est un bus dit de terrain passant à proximité de chaque équipement.

Deux informations ne peuvent pas être transmises simultanément sur le bus B. Par ailleurs, chacune de ces transmissions constitue une tâche devant satisfaire à des contraintes bien déterminées. Il se pose donc le problème d'ordonnancer ces transmissions, c'est-à-dire déterminer l'instant où chacune de ces transmissions doit débuter, relativement à un instant de référence absolue qui est par exemple l'instant d'initialisation du système par le circuit d'initialisation C0.

Dans cet exemple, chacun des éléments C0, ..., C7, A1, ..., A4 fonctionne avec une période de répétition. Par exemple ces périodes sont respectivement : 200 ms, 200 ms, 500 ms, 400 ms, 40 ms, 40 ms, 40 ms, 200 ms, 400 ms, 40 ms, 40 ms. Le système fonctionne donc selon un macro-cycle ayant une durée égale au plus petit commun multiple de ces périodes, c'est-à-dire 400 ms.

Dans cet exemple, chaque tâche est constituée par la transmission d'une seule information et a une durée uniforme égale à 0,4 ms, quel que soit le nombre de destinataires pour cette information. En outre, ces tâches de transmission doivent satisfaire à des contraintes R1 à R33 listées ci-dessous :

R1) ID 1 <u>délai</u> [O;400]
R2) ID 13 <u>après</u> ID 1 [2;40]
R3) ID 14 <u>après</u> ID 1 [2;40]
R4) ID 2 <u>après</u> ID 1 [2;40]
R5) ID 2 <u>après</u> ID 9 [0; 40]
R6) ID 2 <u>après</u> ID 10 [0; 40]
R7) ID 2 <u>après</u> ID 11 [0; 40]
R8) ID 2 <u>après</u> ID 12 [0; 40]
R9) ID 9 <u>délai</u> [0;400]
R10) ID 10 <u>délai</u> [0;400]
R11) ID 11 <u>délai</u> [0; 400]
R12) ID 12 <u>délai</u> [0; 400]
R13) ID 3 <u>après</u> ID 2 [7; 40]
R14) ID 16 <u>après</u> ID 2 [7;40]
R15) ID 3 <u>après</u> ID 16 [0; 40]
R16) ID 3 <u>après</u> ID 13 [0; 40]
R17) ID 3 <u>après</u> ID 14 [0; 40]
R18) ID 3 <u>après</u> ID 8 [0; 40]
R19) ID 17 <u>après</u> ID 3 [7;40]
R20) ID 18 <u>après</u> ID 3 [7;40]
R21 ID 19 <u>après</u> ID 3 [7;40]

R22) ID 4 après ID 3 [7;40]
R23) ID 4 après ID 17 [0;40]
R24) ID 4 après ID 18 [0;40]
R25) ID 4 après ID 19 [0; 40]
R26) ID 5 délai [0,400]
R27) ID 6 après ID 5 [102;200]
R28) ID 8 après ID 5 [102;200]
R29) ID 6 après ID 8 [0; 200]
R30) ID 15 après ID 6 [16;200]
R31) ID 7 après ID 6 [16;200]
R32) ID 7 après ID 15 [0;200]
R33) ID 20 délai [0;400]

Par exemple, la contrainte R26 : ID5 délai [0,400] impose que la transmission de l'information ID5, qui est fournie par une sortie du circuit d'initialisation C0, commence dans un délai compris entre 0 et 400 ms après un instant de référence absolue qui est l'instant d'initialisation défini par le circuit C0 et qui déclenche un macro-cycle.

La contrainte R27 : ID6 après ID5 [102,200] impose que la transmission de l'information ID6, qui est fournie par le capteur C1, ne commence que dans un délai compris entre 102 et 200 ms après l'instant de début de transmission de l'information ID5.

Chaque contrainte porte seulement sur l'instant de début de la transmission, qui doit être compris dans l'intervalle indiqué [$t_{min}$, $t_{max}$]. La transmission peut continuer au-delà de la borne de cet intervalle, elle doit seulement respecter la durée fixée.

L'ensemble des contraintes R1, ..., R33 qui portent sur les tâches de transmission des informations ID1, ..., ID20 peut être représenté par un graphe appelé graphe de successions, dans lequel chaque noeud représente une tâche et chaque arc reliant deux noeuds représente une contrainte. Chaque arc est orienté d'un noeud, dit prédécesseur, vers un noeud correspondant à la tâche sur laquelle porte la contrainte, et qui doit donc être exécutée après la tâche dite prédécesseur correspondant au noeud prédécesseur.

Une étape préliminaire du procédé selon l'invention consiste à réduire le nombre de permutations à vérifier, en ne vérifiant l'ordonnancement des tâches que pendant un micro-cycle qui est le plus grand commun diviseur de toutes les périodes de répétition des tâches. En effet, si on arrive à trouver une permutation telle que si toutes les tâches sont exécutées au cours d'un même micro-cycle et qu'elles satisfassent toutes les contraintes, alors cette permutation ne provoquera aucun conflit au cours d'aucun des micro-cycle constituant un macro-cycle, puisque le pire des cas est celui où toutes les tâches tombent dans un même micro-cycle à cause de la coïncidence des multiples de leurs périodes.

Les figures 4 et 5 illustrent cette étape préliminaire du procédé selon l'invention. Il est à noter que dans le cas où une ou plusieurs tâches ne sont pas considérées à priori comme répétitive, il suffit de leur attribuer une valeur de période commune choisie arbitrairement mais telle qu'elle facilite la détermination d'un micro-cycle. Il suffit donc de déterminer la valeur du plus grand commun diviseur des périodes des tâches répétitives puis de choisir un multiple de cette valeur pour constituer une période commune à toutes les tâches non répétitives.

Les figure 4 et 5 illustrent un exemple où il faut ordonnancer 6 tâches T1, ..., T6 périodiques, respectivement avec des périodes égales à 10 ms, 20 ms, 30 ms, 40 ms, 50 ms, 40 ms. La durée d'exécution est uniforme pour toutes les tâches et est égale à 1 ms.

La figure 4 représente en grisé les intervalles de temps [$t_{min}$, $t_{max}$] pour chacune de ces tâches.

Ces intervalles sont les suivants :

| | |
|---|---|
| TA1 [$t_{min}$, $t_{max}$] = | [0, 4 ms] modulo 10 ms |
| TA2 | [10, 13 ms] modulo 20 ms |
| TA3 | [20, 23 ms] modulo 30 ms |
| TA4 | [30, 32 ms] modulo 40 ms |
| TA5 | [40, 41 ms] modulo 50 ms |
| TA6 | [20, 22 ms] modulo 40 ms |

Ces tâches ont un macro-cycle égal au plus petit commun multiple de leur période, c'est-à-dire 600 ms. Un macro-cycle peut être découpé en 60 micro-cycles de 10 ms. Deux tâches répétitives peuvent être en conflit si elles sont à exécuter au cours d'un même micro-cycle. Par exemple, les tâches TA1, TA3, TA6 doivent être exécutées au cours d'un même micro-cycle [$20_{ms}$, $30_{ms}$] puis [$120_{ms}$, $140_{ms}$], etc.

Pour déterminer un ordonnancement qui convienne dans le pire cas, il suffit de considérer un micro-cycle où toutes les tâches sans exception devraient être exécutées une fois. En pratique, les tâches ne tombent pas toutes dans un même micro-cycle. On considère un cas fictif où cet évènement serait réalisé.

Une translation temporelle peut ramener l'instant d'exécution de chaque tâche dans l'intervalle d'un même micro-cycle [0, 10ms]. Elle est définie par la formule :

$$t_{deb}^{Kfictif} = t_{deb}^{K} - k.PGCD$$

où $t_{deb}^{Kfictif}$ est l'instant fictif de début d'exécution d'une tâche K;
où $t_{deb}^{K}$ est l'instant réel de début d'exécution de la tâche K;
où PGCD est la durée d'un micro-cycle, c'est-à-dire le plus grand commun diviseur des périodes;
et où k est un nombre entier tel que l'instant fictif $t_{deb}^{Kfictif}$ de début d'exécution de la tâche K est ramené dans le micro-cycle choisi, en l'occurence [0,10 ms].

L'intervalle $[t^K_{min}, t^K_{max}]$ défini par toutes les contraintes portant sur la tâche K est donc translaté lui aussi de -k.PGCD.

Le procédé d'ordonnancement selon l'invention est ensuite appliqué dans cet intervalle [0, 10ms]. Lorsqu'une permutation satisfaisant toutes les contraintes a été déterminée, les instants d'exécution réels $t^K_{deb}$ sont déduits des instants fictifs de début d'exécution, par la formule

$$t_{deb}^{K} = t_{deb}^{Kfictif} + k.PGCD \text{ modulo la période de la tâche K.}$$

La figure 5 représente l'ordonnancement des tâches ainsi obtenu, sur l'intervalle 0 à 100 ms, l'intervalle 100 à 600 ms n'étant pas représenté mais ayant un ordonnancement analogue. Chaque intervalle d'exécution est représenté en noir. Considérons à titre d'exemple l'intervalle 20 à 30 ms dans lequel il peut y avoir conflit entre les tâches TA1, TA3, et TA6. La tâche TA1 est exécutée pendant l'intervalle 23 à 24 ms. La tâche TA3 est exécutée pendant l'intervalle 22 à 23 ms. La tâche TA6 est exécutée pendant l'intervalle 21 à 22 ms. Ainsi il n'y a jamais exécution simultanée de TA1 et TA3 ou TA6, quel que soit le micro-cycle considéré, parmi les 60 micro-cycles constituant le macro-cycle [0, 600ms].

D'autre part, si dans une application certaines tâches peuvent être exécutées simultanément, cette étape préliminaire consiste en outre à rassembler les tâches en plusieurs graphes indépendants, si c'est possible, chaque graphe ne rassemblant que des tâches liées entre elles par des contraintes. Le fait d'ordonnancer plusieurs graphes indépendamment, est plus rapide que d'ordonnancer un seul graphe plus complexe.

Dans l'exemple considéré sur la figure 6, les tâches ne peuvent pas être simultanées, il n'y a donc qu'un graphe de successions.

Pour chaque graphe, le procédé selon l'invention consiste tout d'abord à rassembler les tâches en couches telles que :

- chaque tâche appartient à une seule couche du graphe;
- une tâche donnée appartient à une couche de rang K > 2 si toutes les tâches prédécesseurs de cette tâche appartiennent à des couches de rang strictement inférieur à K, et si au moins l'une des tâches prédécesseurs appartient à la couche n°K-1.

La figure 6 représente le graphe de successions pour les tâches réalisées dans le système représenté sur les figures 2 et 3. Les noeuds correspondant aux tâches sont rassemblés dans 6 couches successives L1...L6. Les contraintes R26, R12, R11, R10, R9, R1, R33 sont des contraintes de délais comptés à partir d'un instant de référence absolue DM qui est le début du micro-cycle. La couche L1 comporte les noeuds représentant les tâches de transmission des informations ID5, ID12, ID11, ID10, ID9, ID1, ID20. La couche L2 comporte les noeuds correspondant aux tâches de transmission des informations ID8, ID2, ID14, ID13. La couche L3 comporte les noeuds correspondant aux tâches de transmission des informations ID6 et ID16. La couche L4 comporte les noeuds correspondant aux tâches de transmission des informations ID15 et ID3. La couche L5 comporte les noeuds correspondant aux tâches de transmission des informations ID7, ID17, ID18, ID19. La couche L6 comporte seulement le noeud correspondant à la tâche de transmission de l'information ID4.

Le procédé selon l'invention détermine un ordonnancement couche par couche, successivement dans l'ordre des rangs croissants, L1, L2, ..., L6 correspondant aux successions imposées par les contraintes.

La figure 7 représente l'organigramme d'un exemple de la mise en oeuvre procédé selon l'invention. Une étape préliminaire EO consiste à déterminer le graphe des successions découlant des contraintes portant sur les tâches à ordonnancer, c'est-à-dire à rassembler les tâches en un certain nombre de sous-ensembles constituant les couches du graphe, en fonction des successions imposées par les contraintes. Le cas particulier où il y a des tâches répétitives sera expliqué plus loin.

La liste des contraintes est balayée une première fois. Toute tâche est attribuée à une première couche si elle n'est soumise qu'à des contraintes du type délai par rapport à un instant d'initialisation. Toute tâche est attribuée à une couche de rang 2 si elle est soumise à au moins une contrainte du type après une tâche attribuée à la couche de rang 1, et si elle n'est soumise à aucune contrainte du type après une tâche qui n'a pas encore été attribuée à une couche, et qui donc appartient à une couche de rang supérieur à 1, et qui peut être par exemple la couche de rang 2.

Les couches sont constituées selon les rangs croissants, en réitérant le balayage de la liste des contraintes et en éliminant de cette liste les contraintes portant sur des tâches qui ont été attribuées à une couche.

Toute tâche est attribuée à la couche de rang i > 1 si elle est soumise à au moins une contrainte du type après une tâche qui a été attribuée à la couche de rang i-1 et si elle n'est soumise à aucune contrainte du type après une tâche qui n'a pas encore été attribuée. Quand le balayage a parcouru toute la liste des contraintes, et s'il reste des tâches non attribuées, le rang i est incrémenté et la liste des contraintes est rebalayée jusqu'à ce que toutes les tâches aient été attribuées.

Une première étape E1 détermine les intervalles de temps où doit commencer respectivement l'exécution des tâches constituant la première couche du graphe. Les bornes de chacun de ces intervalles de temps sont données directement par les valeurs des paramètres d'une contrainte du type délai. Il n'est donc pas nécessaire de calculer la valeur absolue des instants qui bornent ces intervalles de temps, pour la première couche.

Une étape E2 consiste à ordonnancer toutes les tâches appartenant à une couche, appelée couche courante, en vérifiant que cet ordonnancement est compatible avec les éventuels ordonnancements réalisés précédemment pour d'autres couches. En effet, l'étape E2 est réitérée pour d'autres couches que la première couche, comme il apparaîtra dans la suite. L'étape E2 sera décrite en détail dans la suite, en se référant à la figure 13.

Si l'étape E2 est un succès, noté S, une étape E3 détermine s'il existe une couche après la couche courante. S'il n'y a pas de couche suivante, une étape E4 conclut que l'ordonnancement de l'ensemble des tâches du graphe considéré est terminé avec succès. S'il y a une couche suivante, celle-ci devient la couche courante et une étape E5 rassemble les données constituant les contraintes portant sur les tâches constituant cette couche suivante.

Puis une étape E6 calcule les bornes des intervalles de temps [$t_{min}$, $t_{max}$] où doit commencer respectivement l'exécution des tâches constituant la couche courante. Ce calcul est décrit par la suite, en se référant à la figure 4. Si le calcul d'un intervalle de temps pour chacune des tâches est un succès, noté S, le procédé consiste ensuite à réitérer l'étape E2 pour ordonnancer les tâches appartenant à la couche courante. Si le calcul d'au moins de l'intervalle de temps pour au moins une tâche conclue à un intervalle vide, l'étape E6 est un échec, noté F. Ce cas sera illustré plus loin en se référant à la figure 4. Alors le procédé consiste en un test E7 qui détermine si la couche courante est la première couche.

Si c'est la première couche, une étape E8 conclut que l'ordonnancement a échoué, car il n'est pas possible de modifier quoi que soit en amont de la première couche. Si la couche courante n'est pas la première couche, alors le procédé consiste à réaliser une étape E9 pour déterminer une couche de rang inférieur à la couche courante et dans laquelle l'ordonnancement va être modifié pour remédier à l'échec de l'ordonnancement dans la couche courante. La couche ainsi déterminée par l'étape E9 devient la couche courante. Le test E7 est réalisé en outre en cas d'échec noté F, de l'ordonnancement de la couche courante par l'étape E2. Il s'agit dans ce cas d'une incompatibilité entre les intervalles [$t_{min}$, $t_{max}$] d'au moins deux tâches de la couche courante. Ce n'est pas le même type de conflit que dans le cas d'un échec de l'étape E6, mais il nécessite lui aussi de refaire l'ordonnancement d'au moins une couche de rang inférieur à celui de la couche courante.

L'étape E9 détermine cette couche en considérant quelles sont les contraintes insatisfaites. Pour chacune de ces contraintes, il y a une tâche précédesseur qui appartient à une couche ayant été ordonnancées précédemment. S'il y a plusieurs contraintes insatisfaites, l'étape E9 détermine pour chacune la couche qui contient la tâche prédécesseur, puis détermine parmi ces couches celle qui a le rang le plus élevé, pour minimiser le nombre de couches à réordonnancer.

D'autre part, l'étape E9 détermine pour la contrainte insatisfaite correspondant à la couche ainsi déterminée, le sens et la durée d'un déplacement de l'instant de début d'exécution de cette tâche prédécesseur, tels que la contrainte insatisfaite pourra être satisfaite lors d'un réordonnancement ultérieur de la couche courante.

Une étape E10 consiste alors à vérifier s'il est possible d'obtenir le décalage temporel déterminé par l'étape E9, en modifiant la permutation qui a été déterminée précédemment par l'étape E2 pour cette couche déterminée par l'étape E9.

Si l'étape E10 conclut qu'il est possible de réaliser ce décalage temporel, au moyen d'une modification de la permutation qui a été déterminée pour la couche déterminée par l'étape E9, alors une étape E11 détermine une nouvelle permutation initiale en réalisant cette modification.

Après l'étape E11, l'étape E2 est réitérée pour réordonnancer la couche courante à partir de cette nouvelle permutation initiale.

Si l'étape E10 conclut qu'il n'est pas possible d'obtenir ce décalage temporel en modifiant la permutation initiale c'est un échec pour la couche déterminée par l'étape E9. Le test E7 détermine alors si la couche qui a été déterminée par l'étape E9 était la première couche ou non. Si c'est la première couche, l'étape E8 conclut que l'ordonnancement de l'ensemble du graphe a échoué. Si ce n'est pas la première couche, l'étape E9 est réitérée pour déterminer une autre couche dans laquelle l'ordonnancement sera redéterminé à partir d'une permutation initiale modifiée.

L'étape E9 recherche une couche à modifier, en considérant successivement les couches correspondant aux contraintes insatisfaites, selon leur rang décroissant à partir de la couche courante. L'étape E9 détermine la couche sur laquelle la procédure d'ordonnancement E2 doit être recommencée à partir d'une nouvelle permutation initiale, en tenant compte de la nature du conflit qui a empêché la réussite de l'ordonnancement dans la couche considérée. Si c'est un conflit entre une tâche de la couche courante et une autre tâche de la même couche, l'étape E9 propose de modifier la permutation pour la procédure d'ordonnancement de la couche courante. Si c'est un conflit entre une tâche de la couche courante et une tâche de l'une des couches ayant été ordonnancée précédemment, elle détermine quelle est cette couche, à partir de l'identité de la tâche qui est en conflit avec une tâche de la couche courante : Dans ce cas, une nouvelle permutation constitue la permutation initiale.

La figure 8 illustre l'étape E1 et l'étape E6 du procédé d'ordonnancement. Elle représente le début DM du macro-cycle d'un graphe, tel que celui représenté sur la figure 6, comportant des couches n°1, ..., m, ..., n, p, q. Chacune des tâches de la couche n°1 est soumise à une seule contrainte qui est du type délai compté à partir du début DM du macro-cycle. Par exemple, la tâche G doit satisfaire une contrainte $R^G$ qui impose que l'instant $t^G_{deb}$, où commence l'exécution de cette tâche G, soit compris dans un intervalle [ $t^G_{min}$, $t^G_{max}$ ]. L'instant $t^G_{deb}$ peut être confondu avec la borne supérieure $t^G_{max}$. sur la figure 8 un petit rectangle noir représente l'intervalle de temps occupé par l'exécution de la tâche.

Pour chacune des tâches, autre que celles de la première couche, une ou plusieurs contraintes du type après peuvent imposer que l'instant de début d'exécution de cette tâche soit compris dans un intervalle de temps déterminé par rapport à une tâche prédécesseur. Considérons par exemple une tâche référencée K dans la couche n°p. Les couches n°1, ..., m, ..., n sont supposées avoir été ordonnancées précédemment. La couche n°p est en cours d'ordonnancement, et la couche n°q n'est pas encore ordonnancée. La tâche K doit satisfaire trois contraintes $R^{K1}$, $R^{K2}$, $R^{K3}$, qui sont du type après. La contrainte $R^{K1}$ impose que l'exécution de la tâche K commence dans un intervalle de temps qui est défini par deux valeurs de durée qui sont référencées par rapport à l'instant $t_1$ où commence l'exécution d'une tâche donnée de la couche n°n. La contrainte $R^{K2}$ impose que l'exécution de la tâche K commence dans un intervalle défini par deux valeurs de durée référencées par rapport à l'instant $t_2$ où commence l'exécution d'une tâche donnée de la couche n°m. La contrainte $R^{K3}$ impose que l'exécution de la tâche K commence à un instant compris dans un intervalle défini par deux valeurs de durée référencées par rapport à l'instant $t_3$ où commence l'exécution d'une tâche donnée de la couche n°n.

Les contraintes de type après sont données avec des valeurs telles qu'il ne peut pas y avoir chevauchement de l'intervalle d'exécution de la tâche prédécesseur avec l'intervalle d'exécution de la tâche subissant la contrainte considérée. Dans ces conditions, si l'ordonnancement d'une couche satisfait toutes les contraintes portant sur les tâches de cette couche, il n'est pas nécessaire de vérifier que cet ordonnancement satisfait en outre d'autres contraintes portant sur les couches de rang inférieur.

L'étape E6 du procédé consiste à déterminer de manière absolue, en se référant à l'instant DM de début de macro-cycle, les bornes de chacun de ces trois intervalles. Elle détermine ainsi trois intervalles [$t^{K1}_{min}$, $t^{K1}_{max}$] [$t^{K2}_{min}$, $t^{K2}_{max}$], et [$t^{K3}_{min}$, $t^{K3}_{max}$]. La tâche K devant satisfaire simultanément les trois contraintes $R^{K1}$, $R^{K2}$, $R^{K3}$, le début d'exécution de cette tâche K doit être compris dans un intervalle [$t^K_{min}$, $t^K_{max}$] qui est l'intersection de ces trois intervalles. Dans le cas où cette intersection n'existe pas, il est nécessaire de remettre en cause l'ordonnancement d'au moins une des couches, n°m et n°n, qui sont reliées à la tâche K par les contraintes $R^{K1}$, $R^{K2}$, et $R^{K3}$. En effet, en modifiant l'ordonnancement de la couche n°n, il est possible de modifier la position relative des instants $t_1$ et $t_3$ de début d'exécution des tâches qui sont reliées à la tâche K par les contraintes $R^{K1}$ et $R^{K3}$. Il est possible aussi de modifier la position de t2 relativement à t1 et à t3 en modifiant l'ordonnancement dans la couche n°n, mais il est préférable de modifier en priorité l'ordonnancement dans les couches de rangs plus élevés, c'est-à-dire la couche n°n dans cet exemple.

En effet, dans le cas où l'ordonnancement d'une couche est modifié, il est nécessaire de recommencer aussi l'ordonnancement de toutes les couches de rang plus élevé et ayant été éventuellement ordonnancées précédemment. Dans l'exemple représenté sur la figure 4, si l'ordonnancement est recommencé dans la couche n°m, il est nécessaire de recommencer l'ordonnancement dans les couches n°m+1, ..., n. Il est donc préférable de recommencer l'ordonnancement dans une couche de rang le plus élevé possible. Dans cet exemple, il est préférable de recommencer l'ordonnancement de la couche n°n plutôt que de recommencer l'ordonnancement dans la couche n°m.

Si le nouvel ordonnancement dans la couche n°n permet de rendre compatible entre elles les contraintes $R^{K1}$, $R^{K2}$, $R^{K3}$, c'est-à-dire de déterminer un intervalle [$t^K_{min}$, $t^K_{max}$] non vide, alors le nombre de couches dans lesquelles l'ordonnancement est redéterminé est limité à un.

Lorsque l'étape E6 du procédé a réussi à déterminer un intervalle [$t^K$min, $t^K$max] pour chacune des tâches de la couche n°p considérée, alors l'étape E2 détermine un ordonnancement de ces tâches.

Les figures 9 à 12 illustrent les principes de base de la procédure appliquée au cours de l'étape E2. Cette procédure ordonnance toutes les tâches appartenant à une même couche, en minimisant le nombre de permutations à vérifier. Cette procédure s'achève avec succès si elle a déterminé une permutation constituant un ordonnancement satisfaisant toutes les contraintes portant sur les tâches de cette couche.

La figure 9 représente un chronogramme illustrant un premier principe de base du procédé selon l'invention pour ordonnancer des tâches à l'intérieur d'une même couche. Ce premier principe impose d'exécuter en priorité les tâches pour lesquelles l'intervalle de temps commence le plus tôt, c'est-à-dire avec une valeur $t_{min}$ la plus petite. En pratique, la permutation initiale des tâches, c'est-à-dire la première permutation à vérifier, sera constituée par une suite référencée MIN-SUITE, dans laquelle les tâches sont rangées selon l'ordre croissant des valeurs de $t_{min}$.

La figure 9 représente par des rectangles IDA et IDB deux intervalles de temps attribués respectivement à l'exécution d'une tâche A et à l'exécution d'une tâche B. Des contraintes imposent que la tâche A commence à être exécutée à l'intérieur d'un intervalle [$t^A_{min}$, $t^A_{max}$] ou, à la limite, à l'instant $t^A_{max}$. Elles imposent que la tâche B commence à être exécutée à l'intérieur d'un intervalle [$t^B_{min}$, $t^B_{max}$] ou, à la limite, à l'instant $t^B_{max}$. Dans cet exemple $t^A_{min}$ est inférieur à $t^B_{min}$. Le premier principe de base consiste à exécuter la tâche A en premier, en décalant l'intervalle pendant lequel dure cette exécution, le plus près possible de la borne inférieure $t^A_{min}$; puis à exécuter la tâche B pendant un intervalle IDB commencant le plus près possible de la borne inférieure $t^B_{min}$ sans chevaucher l'intervalle IDA. Dans cet exemple, l'intervalle IDA a une durée $\delta^A$ qui déborde sur l'intervalle [$t^B_{min}$, $t^B_{max}$], par conséquent les intervalles IDA et IDB seront le plus rapprochés possible en choisissant :

$$t^B_{deb} = t^A_{min} + \delta^A$$

La figure 10 représente, sur le même exemple, les conséquences d'une non-application de ce principe de base, c'est-à-dire faire exécuter la tâche B avant la tâche A. L'intervalle d'exécution IDB débute alors le plus tôt possible c'est-à-dire à la borne inférieure de l'intervalle [$t^B$min, $t^B$max]. L'intervalle d'exécution IDA devrait commencer après la fin de l'intervalle d'exécution IDB pour ne pas chevaucher l'intervalle IDA, mais dans cet exemple l'intervalle d'exécution IDB a une longueur telle qu'il dépasse l'instant $t^A_{max}$ qui constitue la borne supérieure de l'intervalle où il est permis de commencer l'exécution de la tâche A. Au mieux, la tâche A pourrait commencer à l'instant $t^A_{deb} = t^A_{max}$, mais alors il y a chevauchement des deux intervalles d'exécution IDB et IDA. La zone de chevauchement est hâchurée sur la figure 6.

Il apparaît donc dans cet exemple que le non-respect du premier principe augmente la probabilité de ne pas satisfaire certaines contraintes.

La figure 11 représente un chronogramme illustrant un deuxième principe de base du procédé selon l'invention, pour ordonnancer des tâches à l'intérieur d'une même couche. Ce principe de base permet de choisir quelle est la tâche à exécuter en priorité parmi plusieurs tâches pour lesquelles la borne inférieure $t_{min}$ a la même valeur. Ce second principe impose, dans ce cas, d'exécuter en priorité la tâche pour laquelle la borne supérieure $t_{max}$ est la plus petite.

Dans l'exemple représenté sur la figure 11, deux tâches A et B ont la même borne inférieure $t^A_{min} = t^B_{min}$, pour l'intervalle de temps dans lequel doit commencer l'exécution. Par ailleurs, des contraintes imposées par l'existence d'autres intervalles d'exécution non représentés, interdisent l'exécution des tâches A et B avant un instant $t_O$ postérieur à $t^A_{min} = t^B_{min}$, dans un intervalle de temps représenté par des hâchures. Les intervalles d'exécution IDA et IDB ne peuvent donc commencer qu'à partir de cet instant $t_O$. Pour la tâche B, la borne supérieure $t^B_{max}$ est supérieure à la borne supérieure $t^A_{max}$ correspondant à la tâche A. Selon le deuxième principe de base, il faut exécuter en priorité la tâche A. La tâche B est exécutée ensuite à partir d'un instant :

$$t^B_{deb} = t^A_{min} + \delta^A.$$

Ainsi les deux intervalles d'exécution IDA et IDB se succèdent sans problème particulier dû à la borne supérieure $t^B_{max}$.

La figure 12 illustre sur le même exemple, un conflit qui a plus de chance de se produire si le deuxième principe n'est pas respecté. La tâche B est exécutée en premier, à partir de l'instant $t^B_{deb}$ qui coïncide avec la fin $t_0$ de l'intervalle interdit représenté par des hâchures. Ensuite la tâche A devrait être exécutée à partir d'un instant $t^A_{deb} = t^B_{min} + \delta^A$ pour éviter un chevauchement des intervalles IDA et IDB, mais cet instant $t^A_{deb}$ se trouverait alors dans une zone interdite, hâchurée sur la figure, située après la borne supérieure $t^A_{max}$ de l'intervalle où doit commencer cette exécution. Il y a donc une contrainte qui n'est pas satisfaite. Il apparaît donc dans cet exemple que le non-respect du deuxième principe augmente la probabilité de ne pas satisfaire certaines contraintes.

L'étape E2 consistant à ordonnancer les tâches d'une couche peut être réalisée en mettant en oeuvre un procédé connu tel que l'algorithme du simplex. Tout autre procédé d'ordonnancement d'un ensemble de tâches supportant des contraintes définies pour chaque tâche par un intervalle de temps où doit commencer l'exécution de cette tâche, est utilisable à condition qu'il fournisse, en cas d'échec :

- l'identité de la tâche qui est la cause de l'échec de l'ordonnancement de la couche courante;
- le sens et la valeur de la modification de son début d'exécution, nécessaires pour remédier à cet échec, ce sens et cette valeur étant utilisés ensuite pour modifier l'ordonnancement dans une couche de rang inférieur afin de modifier l'intervalle [$t_{min}$, $t_{max}$ ] pour cette tâche.

La figure 13 représente un organigramme d'un exemple préférentiel de mise en oeuvre de l'étape E2 de l'organigramme représenté sur la figure 3. L'étape E2 consiste tout d'abord en une étape E21 consistant à déterminer la suite MIN-SUITE constituée de toutes les tâches de la couche courante, ordonnées selon les valeurs croissantes de la borne inférieure tmin. Cette suite sera utilisée pour appliquer le premier principe énoncé précédemment. Pour maximiser la probabilité d'arriver rapidement à trouver une permutation qui satisfasse toutes les contraintes portant sur les tâches de la couche considérée, la permutation initiale est constituée par MIN-SUITE; et les permutation qui seront vérifiées ensuite, en cas d'échec, seront déduites de MIN-SUITE, par des modifications successives.

D'autre part, l'étape E21 consiste à déterminer la suite MAX-SUITE, constituée de toutes les tâches de la couche courante, ordonnées selon les valeurs croissantes de la borne supérieure $t_{max}$. Cette suite sera utilisée pour appliquer le second principe énoncé précédemment, lorsqu'il faudra modifier la permutation initiale.

Puis une étape E22 consiste à vérifier la permutation courante, c'est-à-dire vérifier si elle satisfait toutes les contraintes portant sur les tâches de la couche courante. Au début, la permutation courante est constituée par la permutation initiale déterminée par l'étape E21.

Cette vérification consiste à prendre successivement chaque tâche dans l'ordre de la permutation courante et à vérifier que l'intervalle d'exécution [$t_{deb}$, $t_{fin}$] imposé par la position occupée par cette tâche dans la permutation courante est compatible avec l'intervalle de temps [$t_{min}$, $t_{max}$] imposé par les contraintes qui portent sur cette tâche. La tâche pour laquelle cette vérification est en cours est appelée tâche courante. Si cette vérification est positive pour chacune des tâches de la permutation courante, cela signifie que la permutation courante est un succès, noté S, et l'ordonnancement peut se poursuivre par l'étape E3 de l'organigramme représenté sur la figure 7.

Si la vérification rencontre au moins une tâche dont la position dans la permutation impose de commencer l'exécution à un instant $t_{deb}$ qui n'est pas dans l'intervalle de temps [$t_{min}$, $t_{max}$] imposé par les contraintes, cette tâche est considérée comme mal placée, puisqu'il y a un conflit entre deux contraintes. Quand l'étape E22 trouve une tâche, notée X, qui est la première mal placée dans la permutation courante, elle tire la conclusion, notée R, qu'il est nécessaire de chercher une tâche candidate à un déplacement pour constituer une nouvelle permutation. Le procédé consiste alors à exécuter une étape E23 qui recherche la tâche précédant immédiatement la tâche courante X dans la suite MAX-SUITE. S'il n'existe pas une telle tâche, l'étape E23 se termine par un échec, noté F, et le procédé consiste à réaliser ensuite l'étape E7 de l'organigramme représenté sur la figure 7.

Si l'étape E23 trouve une tâche candidate Q précédant immédiatement la tâche courante X dans la suite MAX-SUITE, le procédé consiste ensuite en une étape E24 vérifiant que cette tâche Q a déjà été considérée comme bien placée, au cours d'une étape E21 antérieure. Toutes les tâches qui sont considérées comme bien placées sont celles qui ont un rang inférieur à celui de la tâche courante X, puisque la vérification de l'étape E22 est faite selon les rangs croissants dans la permutation courante. Par conséquent, l'étape E24 consiste tout simplement à vérifier que la tâche candidate Q précède la tâche courante X dans la permutation courante. Si l'étape E24 détermine que la tâche Q n'a pas été considérée comme bien placée, l'étape E23 est réitérée pour rechercher une autre tâche candidate, précédant immédiatement la tâche Q dans MAX-SUITE.

Au contraire, si la tâche candidate Q a été considérée comme bien placée, le procédé consiste à exécuter une étape E25 qui consiste à comparer l'instant $t^Q_{deb}$ du début d'exécution de la tâche Q à l'instant $t^X_{max}$ qui est la borne supérieure de l'intervalle de temps correspondant à la tâche courante X.

Si $t^Q_{deb} \geq t^X_{max}$, c'est le cas noté $\alpha$. L'étape suivante est alors une étape E29 consistant à déplacer la tâche Q dans la permutation courante, pour l'insérer entre la tâche courante X et la tâche suivant la tâche X dans la permutation courante. Les tâches qui étaient placées entre Q et X, et la tâche X elle-même, sont décalées d'un rang, vers les rangs inférieurs, pour combler la place laissée libre par Q. Par conséquent, la tâche Q occupe désormais la position qui était celle de X. Le procédé consiste ensuite à réitérer l'étape E22 pour vérifier si la nouvelle permutation courante ainsi obtenue satisfait toutes les contraintes de la couche considérée. Il est à noter que la tâche Q et toutes les autres tâches qui la suivaient ont été déplacées. Elles ne peuvent plus être considérées comme ayant été bien placées car elles ne satisfont pas forcément toutes les contraintes dans leurs nouvelles positions respectives. Les tâches de rang inférieur à Q gardent la même position, donc il n'est pas nécessaire de vérifier qu'elles satisfont toutes les contraintes portant sur elles, le travail de vérification de ces contraintes n'est donc pas refait.

Si $t^Q_{deb} < t^X_{max}$ c'est le cas noté $\bar{\alpha}$, décrit plus loin et le procédé consiste ensuite en une étape E26.

La figure 14 illustre par un exemple le cas $\alpha$. Les intervalles d'exécution sont représentés en pointillés lorsqu'un conflit empêche une exécution, et en traits continus dans le cas contraire.

Considérons une tâche X qui est dans une position PSi de la permutation courante, et une tâche Q considérée comme bien placée, qui est dans une position PSj de la permutation courante. La position PSi impose le début de l'exécution de la tâche X à un instant $t_{deb}$(PSi) qui est au-delà de la borne $t^X_{max}$. La position PSj impose le début de l'exécution de la tâche Q à un instant $t_{deb}$ (PSj) qui est, dans cet exemple, au-delà de l'instant $t^X_{max}$. L'instant $t^Q_{deb}$ (PSj) étant au-delà de l'instant $t^X_{max}$, la borne $t^Q_{max}$ est donc à fortiori supérieure ou égale à $T^X_{max}$, et a donc des chances d'être plus proche de $t_{deb}$(PSi), l'idéal étant que $t_{deb}$(PSi) tombe en deçà de $t^Q_{max}$.

La figure 15 montre qu'en déplaçant les tâches Q et X respectivement dans les positions $PS_{i-1}$ et PSj, la probabilité que l'instant $t_{deb}(PS_{i-1})$ tombe dans la l'intervalle $[t^X_{min}, t^X_{max}]$ est plus grande que la probabilité qu'avait l'instant $t_{deb}(P_{si})$ de tomber dans ce même intervalle, car $t_{deb}$ croit systématiquement avec le rang de la position PS. La figure montre que l'extrémité $t^X_{max}$ du segment correspondant à la tâche X s'est rapprochée d'un intervalle d'exécution, celui qui commence à l'instant $t_{deb}$(PSi-1), et a donc plus de chances d'avoir une intersection avec un tel intervalle.

D'autre part, l'extrémité $t^Q_{max}$ du segment correspondant à la tâche Q a des chances non nulles d'avoir une intersection avec le rectangle représentant l'intervalle d'exécution commençant à l'instant $t_{deb}$(PSi). Par conséquent, la nouvelle permutation a plus de chance que l'ancienne de satisfaire toutes les contraintes et il est donc utile d'essayer cette nouvelle permutation. Dans l'exemple représenté, $t_{deb}(PS_{i-1})$ tombe au-delà de $t_{max}$, il y a donc encore un conflit pour la tâche X. Il est donc nécessaire de faire encore une ou plusieurs autres modifications de la permutation courante.

Dans cet exemple, $t_{deb}(PS_i)$ tombe au-delà de $t^Q_{max}$ donc il y a aussi un conflit pour la tâche Q après le déplacement. Mais dans d'autres exemples correspondant au cas a il peut arriver que les contraintes portant sur X, et celles portant sur Q, soient satisfaites simultanément. Par conséquent il est utile de vérifier toute nouvelle permutation correspondant au cas $\alpha$.

Dans le cas $\bar{\alpha}$, au contraire, d'autres vérifications sont nécessaires avant de pouvoir conclure que la tâche Q est une tâche candidate intéressante. Le procédé consiste alors à réaliser l'étape E26. Celle-ci consiste à comparer l'instant $t^Q_{fin}$ de la fin d'exécution de la tâche Q, à l'instant $t^X_{max}$ qui est la borne supérieure de l'intervalle où doit commencer l'exécution de la tâche X. Si $t^Q_{fin} \geq t^X_{max}$, ce cas est noté $\beta$, et le procédé consiste ensuite à réaliser l'étape E30 qui déplace la tâche Q et l'insère après la tâche X. Le cas contraire est noté $\bar{\beta}$. D'autres vérifications sont nécessaires avant de pouvoir conclure que la tâche Q est une tâche candidate intéressante.

Les figures 16 et 17 illustrent le cas $\beta$. La figure 16 représente une tâche X dans la position $PS_i$ et une tâche Q dans la position PSj, telles que le cas $\bar{\alpha}$ et le cas $\beta$ sont réalisés : l'instant $t^Q_{fin}$ de la fin d'exécution de la tâche Q, c'est-à-dire l'instant $t_{fin}$(PSj) imposé par la position PSj de Q dans la permutation courante, est situé au-delà de l'instant $t^X_{max}$.

La figure 17 montre qu'en déplaçant les tâches Q et X respectivement dans les positions $PS_{i-1}$ et PSj, la probabilité que l'instant $t_{deb}(PS_{i-1})$ tombe dans l'intervalle $[t^X_{min}, t^X_{max}]$ est plus grande que la probabilité qu'avait l'instant $t_{deb}$(PSi) de tomber dans ce même intervalle, car $t_{deb}$ croit systématiquement avec le rang de la position PS. Par ailleurs, l'instant $t^Q_{fin}= t_{fin}$(PSj) est au-delà de la borne $t^X_{max}$ et il n'y a pas de conflit. Ceci signifie que $t^Q_{max}$ est soit supérieur à $t^X_{max}$, soit un peu inférieure à $t^X_{max}$, en étant au plus à une distance égale à l'intervalle $[t_{deb}(PSj), t_{fin}(PSj)]$. Il y a donc quelques chances que $t^Q_{max}$ soit supérieur à $t^X_{max}$, et donc ce cas, il y a quelques chances que $t^Q_{max}$ tombe au-delà de $t_{deb}$(PSi) après le déplacement. Il est donc utile d'essayer une permutation correspondant au cas $\beta$, ce n'est pas forcément du temps perdu.

Dans l'exemple représenté sur la figure 17, le déplacement de Q et X ne suffit pas pour que toutes les contraintes sur Q et X soient satisfaites. Il sera nécessaire de modifier un peu plus la permutation courante.

Dans le cas $\bar{\beta}$, l'étape E27 consiste à comparer l'instant $t^Q_{max}$ qui est la borne supérieure de l'intervalle de temps où doit commencer l'exécution de la tâche Q, à l'instant $t^X_{max}$ qui est la borne supérieure de l'intervalle de temps où doit commencer l'exécution de la tâche X. Si $t^Q_{max} > t^X_{max}$, ce cas est noté $\eta$, et le procédé consiste, alors ensuite à réaliser une étape E28. Le cas contraire est noté $\bar{\eta}$, et le procédé consiste alors à réitérer l'étape E23 car la tâche candidate Q n'a aucune chance d'être intéressante.

Les figures 18 et 19 illustrent par un exemple le cas $\bar{\eta}$. Dans cet exemple, la borne $t^Q_{max}$ est strictement inférieure à l'instant $t^X_{max}$.

La figure 18 représente les tâches X et Q déplacées respectivement dans les positions $PS_{i-1}$ et $P_{si}$. Cette figure 18 montre que l'instant $t^Q_{max}$ devient plus proche de l'instant $t^{(PSi)}_{deb}$ qu'il n'était de l'instant $t^{(PSj)}_{deb}$ mais la tâche Q n'a aucune chance de pouvoir être exécutée car $t^Q_{max}$ est encore plus éloigné de $t^{(PSi)}_{deb}$ que ne l'était $t^Q_{max}$. Puisque la tâche Q a 100 % de chances d'être mal placée, il est inutile d'essayer une telle modification de la permutation courante, c'est pourquoi l'étape suivante est une étape E23 de recherche d'une autre tâche candidate pour un déplacement.

Dans le cas η, l'étape E28 consiste à comparer l'instant $t^Q_{min}$ qui est la borne inférieure de l'intervalle dans lequel doit commencer l'exécution de la tâche Q, avec l'instant $t^X_{min}$ qui est la borne inférieure de l'intervalle de temps dans lequel doit commencer l'exécution de la tâche X.

Le but de cette étape E28 est de vérifier que la tâche Q est placée avant la tâche courant X dans la suite MIN-SUITE, pour pouvoir déplacer la tâche Q après la tâche X. Dans le cas contraire, noté $\bar{\alpha}$, l'étape suivante est une étape E23 de recherche d'une autre tâche candidate pour un déplacement.

Dans le cas χ, l'étape suivante est une étape E29 déplaçant la tâche Q après la tâche X; puis une étape E22 est réitérée pour vérifier si toutes les contraintes portant sur les tâches de la couche courante sont satisfaites.

La figue 20 illustre un exemple où les cas α, β, χ, η, sont réalisées simultanément.

La figure 21 représente les tâches X et Q déplacées respectivement dans les positions PSi-1 et PSi, dans un exemple où les contraintes sont telles qu'elles sont effectivement satisfaites après ce déplacement : $t_{deb}$(PSi) tombe dans l'intervalle [$t^Q_{min}$, $t^Q_{max}$] et $t_{deb}^{(PSi-1)}$ tombe dans l'intervalle [$t^X_{min}$, $t^X_{max}$].

Les figures 22 à 31 illustrent la réalisation de l'étape E2 pour ordonnancer un exemple de couche comportant 13 tâches: A, B, C, D, E, G, J, K, L, N, P, S, T.

La figure 22 représente sur une échelle de temps de O à 14 ms, la position des intervalles d'exécution correspondant respectivement à 13 positions PS1, ..., PS13. Les tâches sont exécutées dans l'ordre des positions PS1, ..., PS13, et chaque intervalle d'exécution a une durée égale à 1 ms.

Chaque tâche doit satisfaire une ou plusieurs contraintes qui résultent en une seule contrainte : le début de l'intervalle d'exécution (rectangle noir sur la figure 22) doit être situé dans un intervalle de temps donné (segments noirs sur la figure 23). Dans un cas limite il peut commencer à la borne supérieure.

L'étape E21 consiste à déterminer la suite MIN-SUITE constituée de toutes les tâches de la couche courante, ordonnées selon les valeurs croissantes de la borne inférieure $t_{min}$.

MIN-SUITE = N, J, S, D, E, B, T, A, K, P, L, C, G.

Sur la figure 23 les 13 tâches sont représentées dans l'ordre de MIN-SUITE, selon le sens d'orientation de l'axe des ordonnées. Pour maximiser la probabilité d'arriver rapidement à trouver une permutation qui satisfasse toutes les contraintes portant sur les tâches de la couche considérée, la permutation dite initiale qui sera vérifiée en premier sera celle constituée par MIN-SUITE; et celles qui seront vérifiées ensuite, en cas d'échec, seront déduites de MIN-SUITE par des modifications successives.

D'autre part, l'étape E21 consiste à déterminer la suite MAX-SUITE, constituée de toutes les tâches de la couche courante, ordonnées selon les valeurs de $t_{max}$ croissantes. Cette suite sera utilisée pour appliquer le second principe énoncé précédemment, lorsqu'il faudra modifier la permutation initiale. Dans cet exemple,

MAX-SUITE = N, S, J, T, G, C, L, B, P, K, A, D, E.

Puis une étape E22 consiste à vérifier la permutation courante, c'est-à-dire vérifier si elle satisfait toutes les contraintes portant sur les tâches de la couche considérée. Au début de l'étape E2, la permutation courante est constituée par la permutation initiale déterminée par l'étape E21.

La vérification est faite successivement pour chaque tâche, dans l'ordre de la permutation courante : N, J, S, D, E, ..., G. Si la vérification est positive pour une tâche celle-ci est considérée comme bien placée dans la permutation, mais son placement peut être remis en cause ultérieurement si cela est nécessaire pour satisfaire d'autres contraintes.

La comparaison des figures 22 et 23 permet de conclure qu'il n'y a pas de problème pour exécuter les tâches N,J,S, et D, respectivement pendant les intervalles d'exécution représentés sur la figure 22. Elles sont donc considérées comme bien placées. La permutation courante est :

<u>N</u> <u>J</u> <u>S</u> <u>D</u> E B T A K P L C G

où les tâches considérées comme bien placées sont soulignées.

La figure 24 illustre le premier conflit rencontré au cours de la vérification de la permutation initiale. Sur la figure 24, des rectangles noirs représentent des intervalles d'exécution pour lesquels il n'y a pas de conflit entre les contraintes, et un rectangle blanc en pointillés représente l'intervalle d'exécution qui est cause d'un conflit. Il correspond à la position PS5, occupée actuellement par la tâche E. Cet intervalle d'exécution n'a aucun point commun avec l'intervalle dans lequel doit commencer l'exécution de la tâche E. L'étape E23 consiste alors à rechercher dans la suite MAX-SUITE une tâche précédant la tâche E, c'est-à-dire telle que la borne $t_{max}$ a une valeur plus élevée.

MAX-SUITE = N, S, J, T, G, C, L, B, P, K, A, D, E.

L'étape E23 trouve la tâche D. L'étape E24 vérifie qu'elle est considérée comme bien placée, en vérifiant qu'elle a un rang inférieur au rang de la tâche courante E, dans la permutation courante. Puis l'étape E25 tire une conclusion $\bar{\alpha}$. Puis l'étape E26 tire une conclusion β. L'étape E29 déplace alors D dans la position POS5 et E recule dans la position POS4. L'étape E22 vérifie que les contraintes portant sur E et les tâches suivantes sont satisfaites mais constate que les contraintes portant sur D ne sont plus satisfaites. La permutation essayée ne convient pas. Elle n'est pas retenue comme nouvelle permutation courante.

Comme le montre la figure 24, cette modification ne pouvait pas être un succès car l'intervalle correspondant à D a une borne supérieure qui n'est pas supérieure à celle de l'intervalle correspondant à E. Ils sont mêmes strictement identiques. Pour éviter de vérifier inutilement de nouvelles permutations il est possible de prendre des précautions lors de la constitution de MAX-SUITE, au cours de l'étape E21 : Lorsque deux tâches de la même couche ont pour contrainte un même intervalle de temps [$t_{min}$, $t_{max}$], il est possible de les mettre dans deux positions différentes respectivement dans la suite MIN-SUITE qui constitue la permutation initiale, et dans la suite MAX-SUITE. Dans l'exemple illustré sur les figures 22 à 31, il y a au moins deux possibilités pour constituer la suite MAX-SUITE puisqu'il est possible de permuter D et E :

N, S, J, T, G, C, L, B, P, K, A, E, D

ou N, S, J, T, G, C, L, B, P, K, A, D, E.

Il aurait été préférable de choisir l'ordre E, D qui est l'ordre inverse de l'ordre D, E dans lequel elles sont prises pour constituer la permutation initiale

MIN-SUITE = N, J, S, D, E, B, T, A, K, P, L, C, G.

L'étape E23 trouverait alors comme tâche candidate successivement : A, K, P, B, L, C, G, T, J; et l'étape E24 retiendrait la tâche J.

On démontre qu'en règle générale, si les tâches de la couche à ordonner n'ont à satisfaire que des contraintes du type délais, il est préférable de placer dans un ordre inverse, SUITE, toutes les tâches ayant le même intervalle [$t_{min}$, $t_{max}$] quel que soit leur nombre. Par contre, s'il y a à la fois des contraintes de type délais et des contraintes de type après, il est préférable de les placer dans un même ordre.

Considérons la suite de cet exemple, en conservant le choix initial de MAX-SUITE :

N, S, J, T, G, C, L, B, P, K, A, P.

La permutation courante est :

N J S E D B T A K P L C G

Après cette tentative malheureuse de modification de la permutation, l'étape E23 trouve comme tâche candidate successivement A, K, P, B, L, C, G, T, qui sont rejetées par l'étape E24. Puis l'étape E23 trouve la tâche J.

La figure 25 illustre cette nouvelle tentative de modification. L'étape E24 vérifie que la tâche J est considérée comme bien placée. L'étape E25 arrive à la conclusion $\bar{\alpha}$ . L'étape E26 arrive à la conclusion $\bar{\beta}$. Les étapes E27 et E28 arrivent à la conclusion $\eta$ et $\chi$. Par conséquent l'étape E29 place la tâche J dans la position PS5, à la place de E. Les tâches E, D et S reculent d'une place, S se trouvant dans la position PS2, D dans la position PS3, et E dans la position PS4. Les autres tâches ne changent pas de place.

L'étape E22 consiste à vérifier ensuite que les tâches qui ont été déplacées vérifient toutes les contraintes portant sur elles, en commençant par la tâche de rang le plus bas parmi celles déplacées : S, puis E, puis D, puis J. Elle vérifie ensuite qu'il n'y a pas de conflit entre les contraintes successivement pour les tâches B, T, A, K.

La figure 26 illustre la nouvelle permutation courante. Il est à remarquer que pour la tâche K l'intervalle d'exécution commence à l'instant exact où se termine l'intervalle dans lequel doit commencer l'exécution de la tâche K. Il n'y a pas de conflit, mais les contraintes sont satisfaites de justesse. L'état de la permutation courante est :

N, S, E, D, J, B, T, A, K, P, L, C, G.

La figure 27 montre qu'il apparaît un conflit pour la tâche P. L'étape E23 est alors réitérée pour déterminer dans la suite MAX-SUITE la tâche précédant immédiatement la tâche P dans cette suite. Elle trouve la tâche B. L'étape E24 vérifie que la tâche B fait partie des tâches qui sont considérées comme bien placées. Les étapes E25 et E26 tirent les conclusions $\bar{\alpha}$ puis $\bar{\beta}$. L'étape E27 est alors réalisée. Celle-ci constate que $t^{B}_{max} = t^{P}_{max}$, par conséquent elle en tire la conclusion $\bar{\eta}$. L'étape E23 est alors réitérée pour rechercher une autre tâche candidate dans la suite MAX-SUITE. En effet, le segment représentant l'intervalle de temps correspondant à B n'aurait aucun point d'intersection avec l'intervalle d'exécution [ 9 ms, 10ms] correspondant à la position POS10, si la tâche B était déplacée à cette position. Par conséquent les contraintes portant sur B ne seraient pas satisfaites.

L'étape E23 trouve alors successivement les tâches L, C, G mais l'étape E24 les rejette car elles ne sont pas considérées comme bien placées dans la permutation. Finalement les étapes E23 et E24 trouvent la tâche T. Les étapes E25 à E28 tirent successivement les conclusions $\bar{\alpha}$,$\bar{\beta}$, $\eta$, $\chi$. L'étape E29 déplace T à la position POS10. Les tâches P, K, A reculent respectivement dans les positions POS9, POS8, POS7.

L'étape E22 vérifie ensuite que les contraintes portant sur les tâches déplacées A, K, P, T, et les suivantes, sont satisfaites. La nouvelle permutation courante est :

N, S, E, D, J, B, A, K, P, T, L, C, G

Comme le montre la figure 28, l'étape E22 constate ensuite que les contraintes portant sur la tâche L ne sont pas satisfaites.

L'étape E23 trouve ensuite la tâche T et l'étape E24 vérifie qu'elle est considérée comme bien placée. L'étape E25 et les suivantes peuvent donc être exécutées. Elles tirent les conclusions $\bar{\alpha}$, puis $\bar{\beta}$, puis $\eta$ et $\chi$. L'étape E29 peut alors être exécutée. Elle place la tâche T dans la position PS 11 qui était occupée par la tâche L. La tâche L recule d'une place. L'étape E22 vérifie que les contraintes portant sur les tâches déplacées L et T sont satisfaites. Par conséquent la permutation courante devient :

N, S, E, D, J, V, A, K, P, L, T, C, G

Comme le montre la figure 29, il y a un conflit entre les contraintes portant sur la tâche C. L'étape E23 détermine la tâche précédant la tâche C dans la suite MAX-SUITE. Elle trouve la tâche G mais l'étape E24 constate que cette tâche G n'est pas considérée comme bien placée dans la permutation. L'étape E23 est réitérée et elle détermine une autre tâche, T, précédant la tâche C dans la suite MAX-SUITE. L'étape E24 vérifie que la tâche T est considérée comme bien placée dans la permutation. L'étape E25 tire la conclusion $\alpha$ puisque $t^T_{deb} = t^C_{max}$. L'étape E29 est donc réalisée immédiatement et elle place donc la tâche T après la tâche C dans la permutation, ce qui revient à permuter les positions de C et de T. L'étape E22 vérifie ensuite que toutes les contraintes portant sur les tâches déplacées C et T sont satisfaites.

La nouvelle permutation courante est :

N, S, E, D, J, B, A, K, P, L, C, T, G

Comme le montre la figure 30, l'étape E22 constate qu'il y a un conflit entre les contraintes portant sur la tâche G. L'étape E23 détermine une tâche, T, qui précède la tâche G immédiatement dans la suite MAX-SUITE. L'étape E24 vérifie que la tâche T est considérée comme bien placée dans la permutation. L'étape E25 tire la conclusion $\alpha$ puisque $t^T_{deb} = t^G_{max}$. L'étape E29 déplace T après G dans la permutation, ce qui revient à permuter T et G. Puis l'étape E22 vérifie que toutes les contraintes portant sur les tâches déplacées G et T sont satisfaites. La nouvelle permutation courante est :

N, S, E, D, J, B, A, K, P, L, C, G, T.

Toutes les tâches sont considérées comme bien placéess car toutes les contraintes sont satisfaites, comme le montre la figure 31, par conséquent la réalisation de l'étape E2 se termine par un succès S. S'il y a d'autres couches de rang plus élevé, leur ordonnancement se poursuit par l'étape E3 de l'organigramme représenté sur la figure 7.

**Revendications**

1. Procédé pour ordonnancer des tâches successives (ID1, ..., ID20) au moyen d'un ordinateur (OR), certaines tâches devant satisfaire des contraintes; les contraintes, pour une tâche, consistant en ce que l'instant $t^K_{deb}$ de début d'exécution doit être compris dans au moins un intervalle de temps $[t^K_{min}, t^K_{max}]$ prédéterminé par rapport à l'instant de début d'exécution d'une autre tâche, appellée prédécesseur, dont l'exécution précède celle de la tâche considéré; ou bien prédéterminé par rapport à un instant de référence absolue (DM);

   caractérisé en ce qu'il consiste à :

   - considérer que toutes les tâches sont répétitives, et à réduire l'intervalle de temps sur lequel l'ordonnancement est à déterminer, en réduisant cet intervalle à un micro-cycle dont la durée est égale au plus grand commun diviseur de toutes les périodes de répétition des tâches, et en recherchant un ordonnancement tel que si toutes les tâches sont exécutées au cours d'un même micro-cycle elles satisfassent toutes les contraintes;
   - rassembler les tâches à exécuter, dans des couches (L1, ..., L6) en fonction des successions imposées par les contraintes;
   - ordonnancer (E2 à E6) les tâches couche par couche, dans l'ordre des couches de rangs croissants, jusqu'à la dernière couche si c'est possible; et conclure alors que l'ordonnancement obtenu est bon;

   en ce que, si aucun ordonnancement de la première couche ne satisfait toutes les contraintes portant sur les tâches de la première couche (L1), il consiste à arrêter l'ordonnancement (E8), et à conclure à un échec;
   et en ce que si l'ordonnancement réalisé dans une couche (P) dite courante, qui n'est pas la première couche, ne satisfait pas une ou plusieurs contraintes ($R^{K1}$) portant sur une tâche (K1) appartenant à la couche courante (p), il consiste à :

   - refaire (E9, ...,E11, E2) l'ordonnancement d'une couche (n) qui est la couche de rang le plus élevé (n) parmi les couches contenant respectivement les tâches prédécesseurs correspondant aux contraintes ($R^{K1}$) non satisfaites, en décalant l'instant d'exécution de la tâche prédécesseur contenue dans cette couche (n) avec un sens et une durée tels que la contrainte insatisfaite pourra être satisfaite lors d'un réordonnancement ultérieur de la couche courante (p);
   - puis à faire (E2, ..., E6), ou éventuellement refaire, l'ordonnancement de toutes les autres couches (p, q) ayant un rang supérieur à celui de la couche de la tâche prédécesseur, jusqu'à la dernière couche, si c'est possible, et à conclure alors (E4) que l'ordonnancement obtenu est bon.

2. Procédé selon la revendication 1, caractérisé en ce que pour ordonnancer chaque couche (L1, ..., L6) d'un graphe, il consiste, successivement et dans cet ordre, à :

- calculer (E6), pour chaque tâche de la couche courante, les bornes $t_{min}$ et $t_{max}$ de l'intervalle où doit commencer l'exécution de cette tâche;
- constituer (E21) une première suite (MIN-SUITE) dans laquelle toutes les tâches de la couche courante sont ordonnées selon les valeurs de $t_{min}$ croissantes;
- constituer (E21) une seconde suite (MAX-SUITE) dans laquelle toutes les tâches de la couche courante sont ordonnées selon les valeurs de $t_{max}$ croissantes;
- constituer (E21) une permutation dite initiale en ordonnant les tâches de la couche courante dans l'ordre de la première suite (MIN-SUITE);
- vérifier (E22) si la permutation initiale satisfait toutes les contraintes portant sur les tâches de la couche courante;
- conclure (S) que l'ordonnancement de la couche courante est un succès si toutes les contraintes sont satisfaites;
- sinon, déterminer (E22) dans la permutation initiale la première tâche (X), dite mal placée, pour laquelle une contrainte n'est pas satisfaite;
- déterminer (E23, E24) dans la seconde suite (MAX-SUITE) une tâche dite candidate (Q) qui précède immédiatement la tâche mal placée (X), dans cette seconde suite, et qui précède aussi la tâche mal placée (X), dans la permutation courante;
- vérifier (E25, ..., E29, E22) que, si la tâche candidate (Q) est déplacée dans la permutation courante pour être placée immédiatement après la tâche mal placée (X), toutes les contraintes portant sur toutes les tâches ainsi déplacées sont alors satisfaites; et

    -- si au moins une contrainte n'est pas satisfaite, conclure (R) que la tâche candidate ne convient pas, puis déterminer (E23, E24) dans la seconde suite (MAX-SUITE) une autre tâche candidate et réitérer la vérification précédente (E25, ..., E29, E22); et si, ce n'est pas possible, conclure (F) que l'ordonnancement de la couche courante à échoué;
    -- si toutes les contraintes sont satisfaites, conclure (S) que l'ordonnancement de la couche courante est un succès.

## Patentansprüche

**1.** Verfahren für die Ablauffolgeplanung von aufeinanderfolgenden Aufgaben (ID1, ..., ID20) mittels eines Rechners (OR), wobei die Aufgaben Bedingungen erfüllen müssen; wobei die Bedingungen für eine Aufgabe darin bestehen, dass der Zeitpunkt $t^K_{deb}$ des Ausführungsbeginns in wenigstens einem Zeitintervall [$t^K_{min}$, $t^K_{max}$] liegen muss, das in bezug auf den Zeitpunkt des Ausführungsbeginns einer weiteren Aufgabe, Vorgänger genannt, deren Ausführung der der betrachteten Aufgabe vorhergeht, vorbestimmt ist; oder auch in bezug auf einen absoluten Bezugszeitpunkt (DM) vorbestimmt ist;
dadurch gekennzeichnet, dass es darin besteht:

- zu berücksichtigen, dass sich alle Aufgaben wiederholen, und das Zeitintervall, auf welchem die Ablauffolgeplanung zu bestimmen ist, zu verringern, indem dieses Intervall auf einen Mikrozyklus verringert wird, dessen Dauer gleich dem größten gemeinsamen Teiler aller Wiederhölungsperioden der Aufgaben ist, und indem eine Ablauffolgeplanung so gesucht wird, dass wenn alle Aufgaben während desselben Mikrozyklus ausgeführt werden, sie alle Bedingungen erfüllen; - die auszuführenden Aufgaben in Abhängigkeit von durch die Bedingungen auferlegten Folgen in Ebenen (L1, ..., L6) zu sammeln;
- die Aufgaben Ebene für Ebene in der Reihenfolge der Ebene mit wachsenden Rängen, wenn möglich bis zur letzten Ebene, zu planen (E2 bis E6); und dann zu schließen, dass die erhaltene Ablauffolgeplanung gut ist;

dass, wenn keine Ablauffolgeplanung der ersten Ebene alle die Aufgaben der ersten Ebene (L1) betreffenden Bedingungen erfüllt, es darin besteht, die Ablauffolgeplanung anzuhalten (E8) und auf einen Fehlschlag zu schließen;
und dass, wenn die in einer laufend genannten Ebene (P), die nicht die erste Ebene ist, ausgeführte Ablauffolgeplanung eine oder mehrere Bedingungen ($R^{X1}$) nicht erfüllt, die eine zur laufenden Ebene (p) gehörige Aufgabe (Kl) betreffen, es darin besteht:

- die Ablauffolgeplanung einer Ebene (n), die unter den Ebenen, die jeweile die den nicht erfüllten Bedingungen ($R^{K1}$) entsprechenden Vorgängeraufgaben enthalten, die mit dem höchsten Rang (n) ist, wieder anzufangen, indem der Ausführungszeitpunkt für die in dieser Ebene (n) enthaltene Vorgängeraufgabe mit einer Richtung und einer Dauer verschoben wird, so dass die nicht erfüllte Bedingung bei einer späteren erneuten Ablauffolgeplanung der laufenden Ebene (p) erfüllt werden kann;

- dann die Ablauffolgeplanung aller weiteren Ebenen (p, q) mit einem Rang höher als demjenigen der Ebene der Vorgängeraufgabe, wenn möglich bis zur letzten Ebene durchzuführen (E2, ... E6) oder eventuell erneut durchzuführen und dann zu schließen (E4), dass die erhaltene Ablauffolgeplanung gut ist.

**2.** Verfahren nach Anspruch 1, dadurch gekennzeichnet, dass es für die Ablauffolgeplanung jeder Ebene (L1, ... L6) eines Graphen darin besteht, nacheinander und in dieser Reihenfolge:

- für jede Aufgabe der laufenden Ebene die Schranken $t_{min}$ und $t_{max}$ des Intervalls, in dem die Ausführung dieser Aufgabe beginnen soll, zu berechnen;
- eine erste Folge (MIN-SUITE) aufzustellen (E21), in welcher alle Aufgaben der laufenden Ebene entsprechen den wachsenden werten von $t_{min}$ angeordnet sind;
- eine zweite Folge (MAX-SUITE) aufzustellen (E21), in welcher alle Aufgaben der laufenden Ebene entsprechend den wachsenden Werten von $t_{max}$ angeordnet sind;
- eine anfänglich genannte Permutation aufzustellen (E21), indem die Aufgaben der laufenden Ebene in der Reihenfolge der ersten Folge (MIN-SUITE) angeordnet werden;
- zu prüfen (E22), ob die anfängliche Permutation alle die Aufgaben der laufenden Schicht betreffenden Bedingungen erfüllt;
- zu schließen (S), dass die Ablauffolgeplanung der laufenden Schicht ein Erfolg ist, wenn alle Bedingungen erfüllt sind;
- wenn nicht, in der anfänglichen Permutation die schlecht angeordnet genannte erste Aufgabe (X) zu bestimmen (E22), für welche eine Bedingung nicht erfüllt ist;
- in der zweiten Folge (MAX-SUITE) eine Kandidat genannte Aufgabe (Q) zu bestimmen (E23, E24), die der schlecht angeordneten Aufgabe (x) in dieser zweiten Folge direkt vorhergeht und die auch der schlecht angeordneten Aufgabe (X) in der laufenden Permutation vorhergeht;
- zu prüfen (E25, ... E29, E22), dass, wenn die Kandidataufgabe (Q) in der laufenden Permutation verschoben wird, um direkt nach der schlecht angeordneten Aufgabe (X) angeordnet zu werden, alle Bedingungen, die alle so verschobenen Aufgaben betreffen, dann erfüllt sind; und

  -- wenn wenigstens eine Bedingung nicht erfüllt ist, zu schließen (R), dass die Kandidataufgabe nicht geeignet ist, dann in der zweiten Folge (MAX-SUITE) eine weitere Kandidataufgabe zu bestimmen (E23, E24) und die vorhergehende Prüfung zu wiederholen; und wenn das nicht möglich ist, zu schließen (F) dass die Ablauffolgeplanung der laufenden Ebene fehlgeschlagen ist;
  -- wenn alle Bedingungen erfüllt sind, zu schließen (S), dass die Ablauffolgeplanung der laufenden Schicht ein Erfolg ist.

## Claims

**1.** Method of scheduling successive tasks (ID1,...,ID20) using a computer (OR) when some tasks must satisfy constraints whereby the time $^{k}_{tst}$ at which execution of the task starts must be within at least one predetermined time interval [$t^k$min, $t^k$max] relative either to the execution start time of another, so-called predecessor task execution of which precedes that of the task in question or to an absolute reference time (DM), which method is characterized in that it comprises the steps of:

- considering all the tasks to be repetitive, to reduce the time interval during which scheduling is to be determined, reducing the scheduling time interval to a microcycle the duration of which is equal to the highest common denominator of all the task repeat periods and looking for a schedule whereby if all the tasks are executed in the same microcycle they satisfy all the constraints;
- grouping the tasks to be executed into layers (L1,...,L6) in accordance with sequences imposed by the constraints;
- scheduling (E2 to E6) the tasks layer by layer in order of increasing layer as far as the last layer, if possible, and in this case deciding that scheduling succeeds;

in that, if no scheduling of the first layer satisfies all the constraints applying to the tasks of the first layer (L1), stopping scheduling (E8) and deciding it fails;
and in that, if the scheduling effected in a so-called current layer (P) that is not the first layer does not satisfy one or more constraints ($R^{K1}$) applying to a task (K1) of the current layer (p):

- rescheduling (E9,...,E11, E2) the highest layer (n) of those layers containing the respective predecessor tasks corresponding to the unsatisfied constraints ($R^{K1}$) by shifting the execution time of the predecessor task contained in that layer (n) in a direction and by an amount such that the unsatisfied constraint can be satisfied on subsequent rescheduling of the current layer (p);
- then scheduling (E2,...,E6) or rescheduling all other layers (p, q) higher than the layer of the predecessor task, as far as the last layer, if possible, and then deciding (E4) that the resulting scheduling succeeds.

**2.** Method according to claim 1, characterized in that it comprises the following steps in this order for scheduling each layer (L1,...,L6) of a graph:

- calculating (E6) for each task of the current layer the limits $t_{min}$ and $t_{max}$ of the time interval in which execution of that task must start;
- constructing (E21) a first series (MIN-SERIES) in which all the tasks of the current layer are scheduled in increasing order of their lower limit $t_{min}$;
- constructing (E21) a second series (MAX-SERIES) in which all the tasks of the current layer are scheduled in increasing order of their upper limit $t_{max}$;
- constructing (E21) a so-called initial permutation by scheduling the tasks of the current layer in the order of the first series (MIN-SERIES);
- verifying (E22) if the initial permutation satisfies all the constraints applying to the tasks of the current layer;
- deciding (S) that the scheduling of the current layer succeeds if all the constraints are satisfied;
- otherwise, determining (E22) in the initial permutation the first so-called ill-placed task (X) for which a constraint is not satisfied;
- determining (E23, E24) in the second series (MAX-SERIES) a so-called candidate task (Q) immediately preceding the ill-placed task (X) in that second series and which also precedes the ill-placed task (X) in the current permutation;
- verifying (E25,...,E29, E22) that, if the candidate task (Q) is shifted in the current permutation to be immediately after the ill-placed task (X), all the constraints applying to all the tasks shifted in this way are then satisfied; and

    -- if at least one constraint is not satisfied, deciding (R) that the candidate task is not suitable, then determining (E23, E24) in the second series (MAX-SERIES) another candidate task and repeating the previous verification (E25,...,E29, E22) and, if this is not possible, deciding (F) that the scheduling of the current layer fails;
    -- if all the constraints are satisfied, deciding (S) that the scheduling of the current layer succeeds.

FIG.1

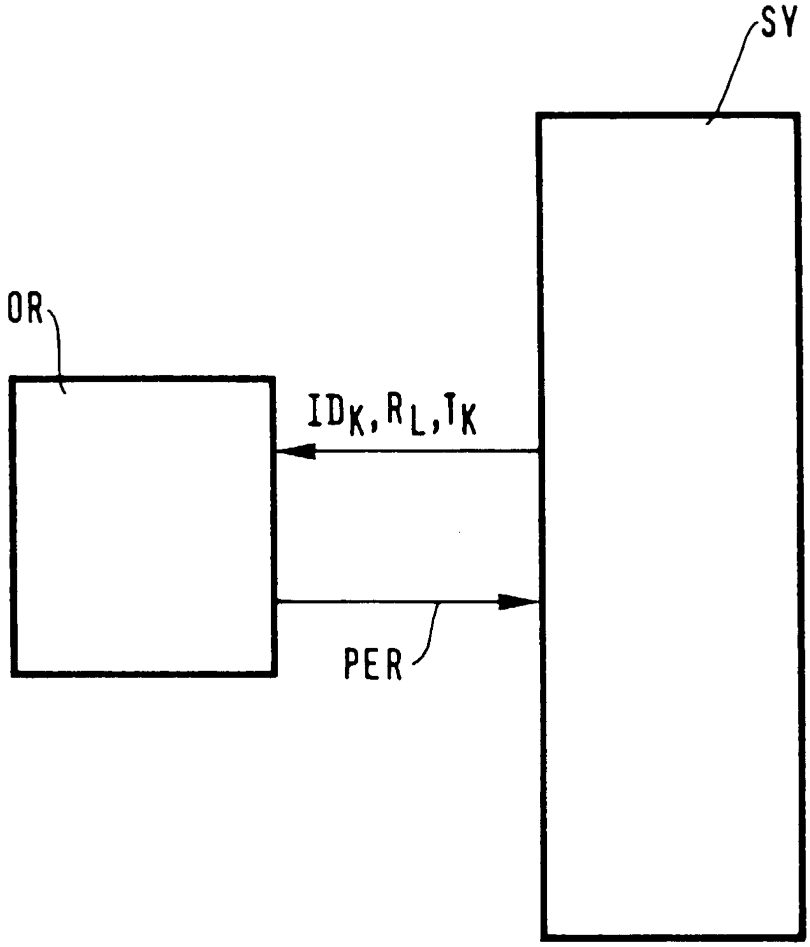

FIG.2

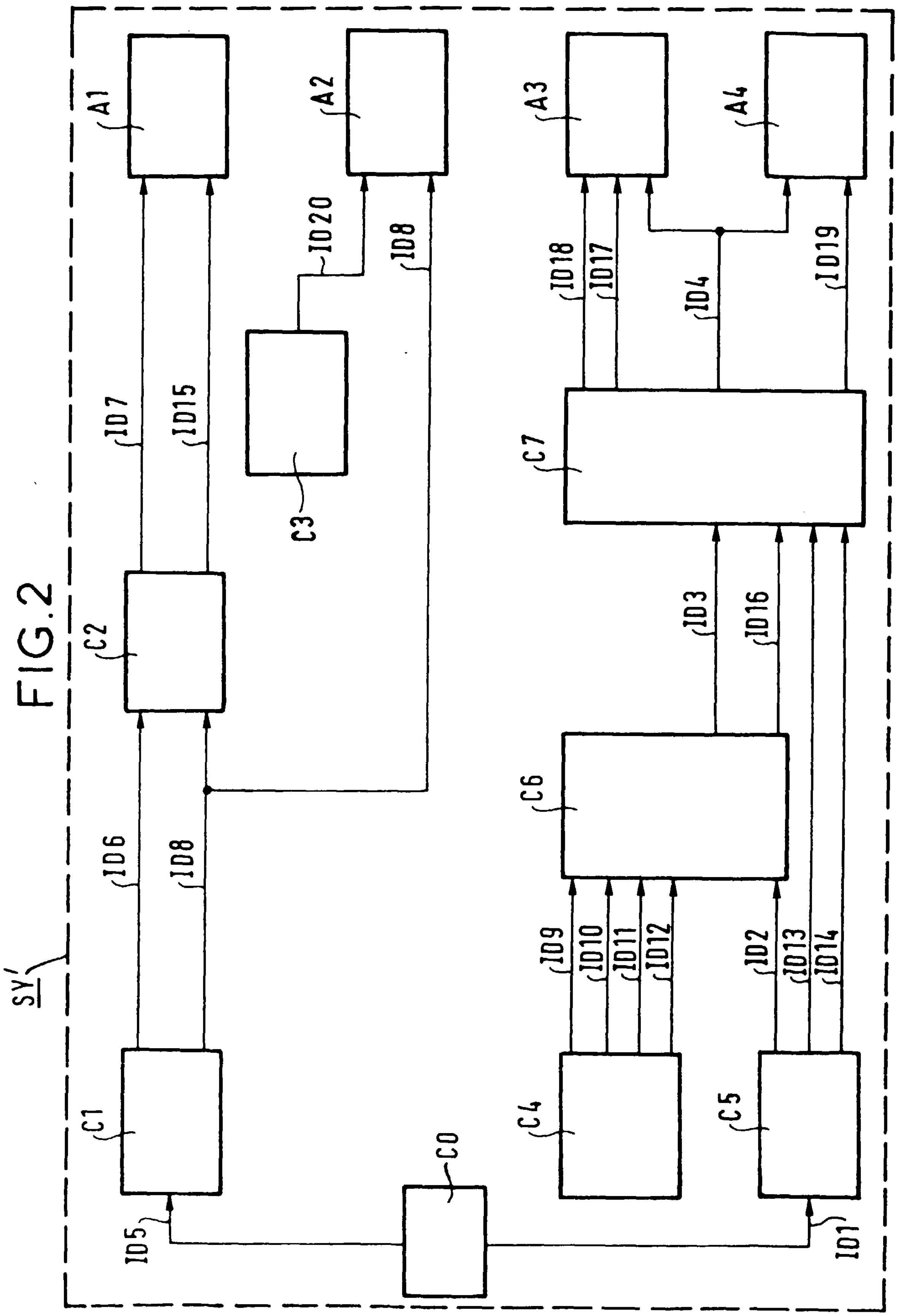
SY'
A1
A2
A3
A4
C0
C1
C2
C3
C4
C5
C6
C7
ID1
ID2
ID3
ID4
ID5
ID6
ID7
ID8
ID8
ID9
ID10
ID11
ID12
ID13
ID14
ID15
ID16
ID17
ID18
ID19
ID20

FIG.3

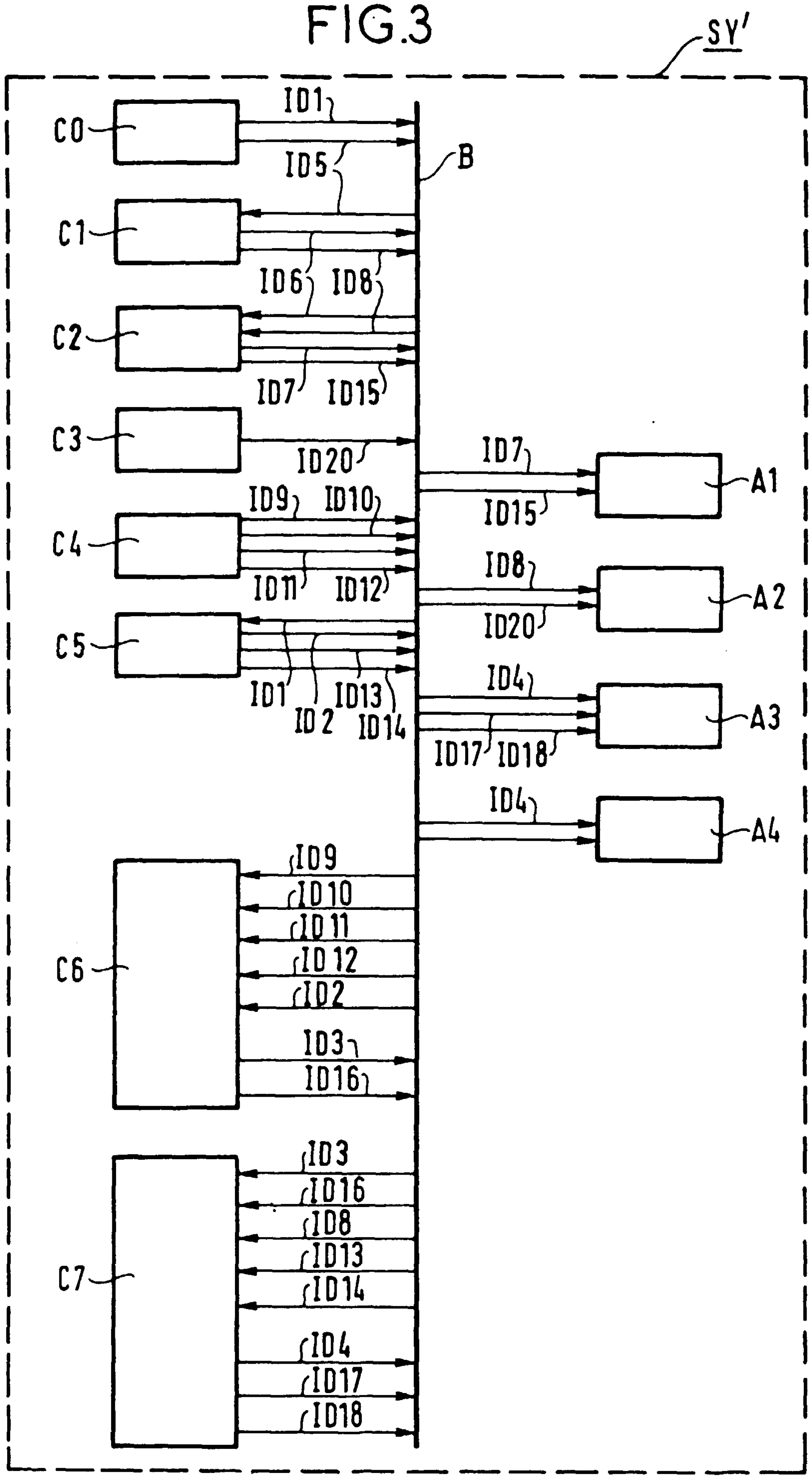
SY'
C0
C1
C2
C3
C4
C5
C6
C7
B
A1
A2
A3
A4
ID1
ID2
ID3
ID4
ID5
ID6
ID7
ID8
ID9
ID10
ID11
ID12
ID13
ID14
ID15
ID16
ID17
ID18
ID20

FIG.4

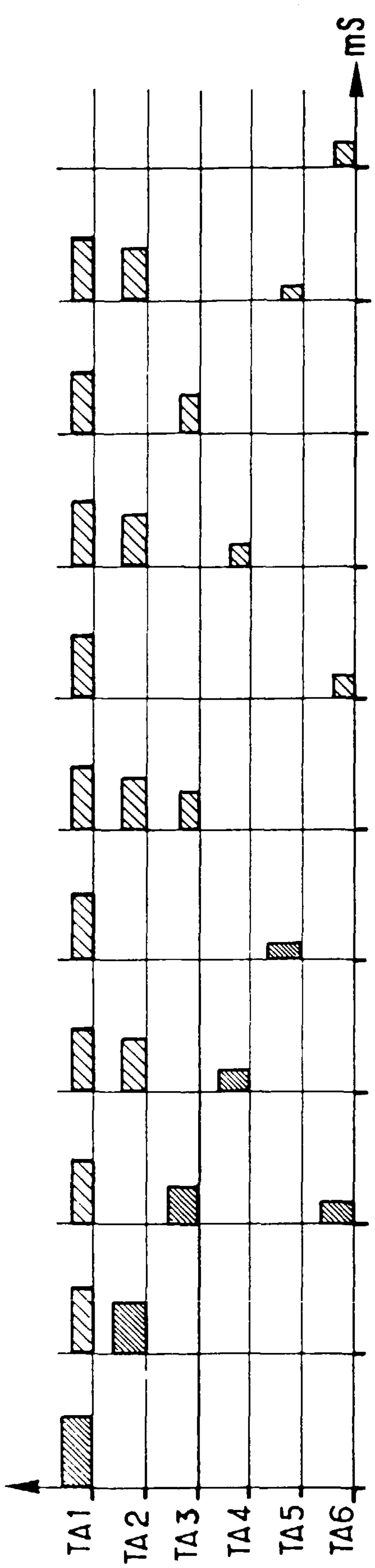
TA1
TA2
TA3
TA4
TA5
TA6
0
10
20
30
40
50
60
70
80
90
100
mS

FIG.5

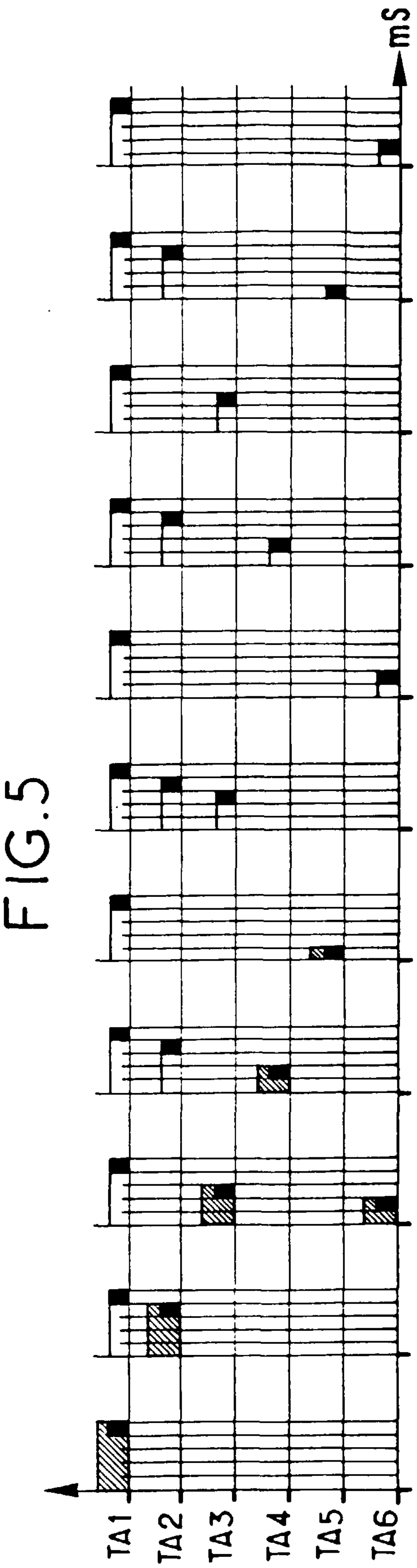
TA1
TA2
TA3
TA4
TA5
TA6
0
10
20
30
40
50
60
70
80
90
100
mS

FIG.6

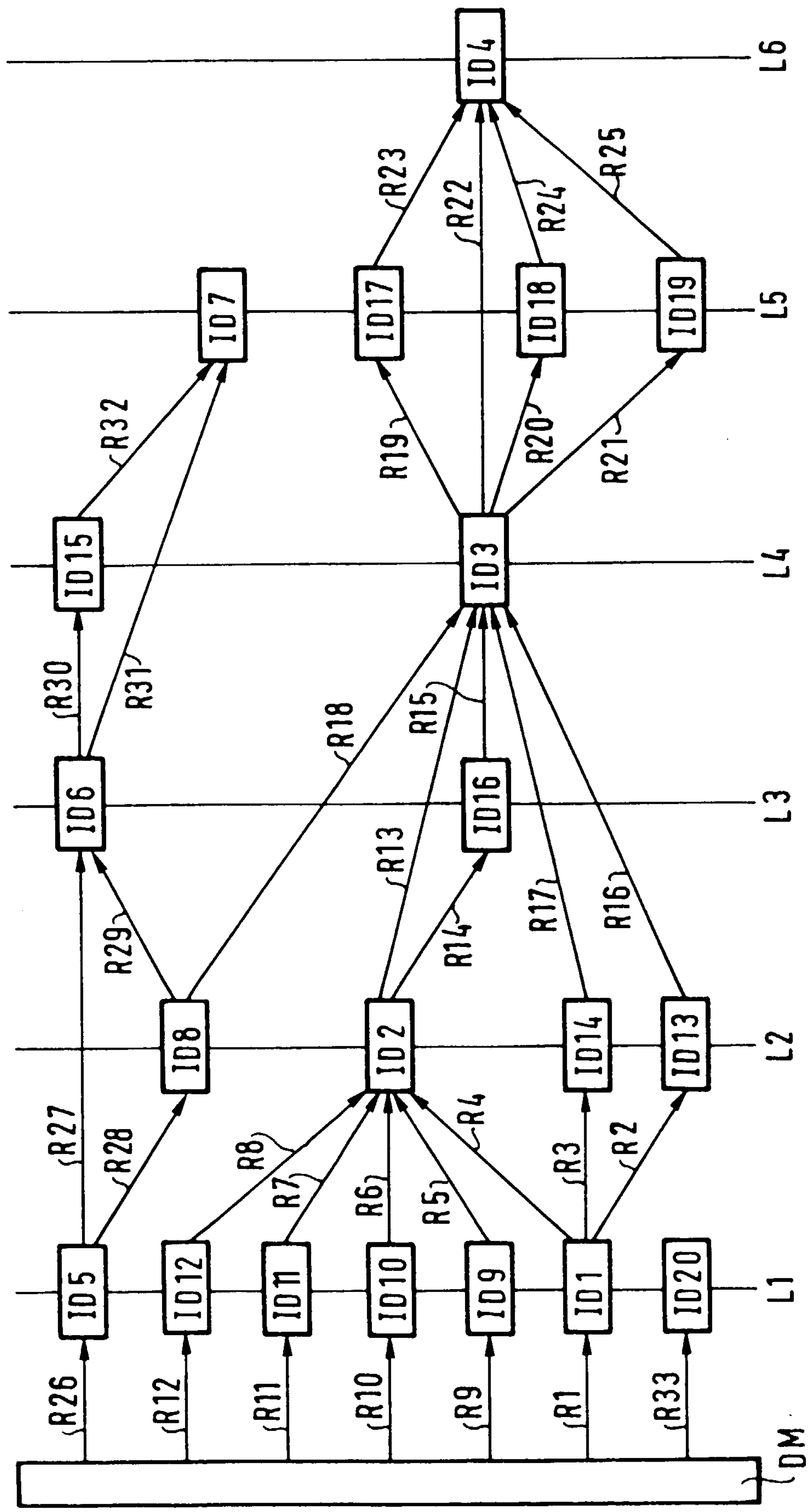
ID1
ID2
ID3
ID4
ID5
ID6
ID7
ID8
ID9
ID10
ID11
ID12
ID13
ID14
ID15
ID16
ID17
ID18
ID19
ID20
R1
R2
R3
R4
R5
R6
R7
R8
R9
R10
R11
R12
R13
R14
R15
R16
R17
R18
R19
R20
R21
R22
R23
R24
R25
R26
R27
R28
R29
R30
R31
R32
R33
L1
L2
L3
L4
L5
L6
DM

FIG.7

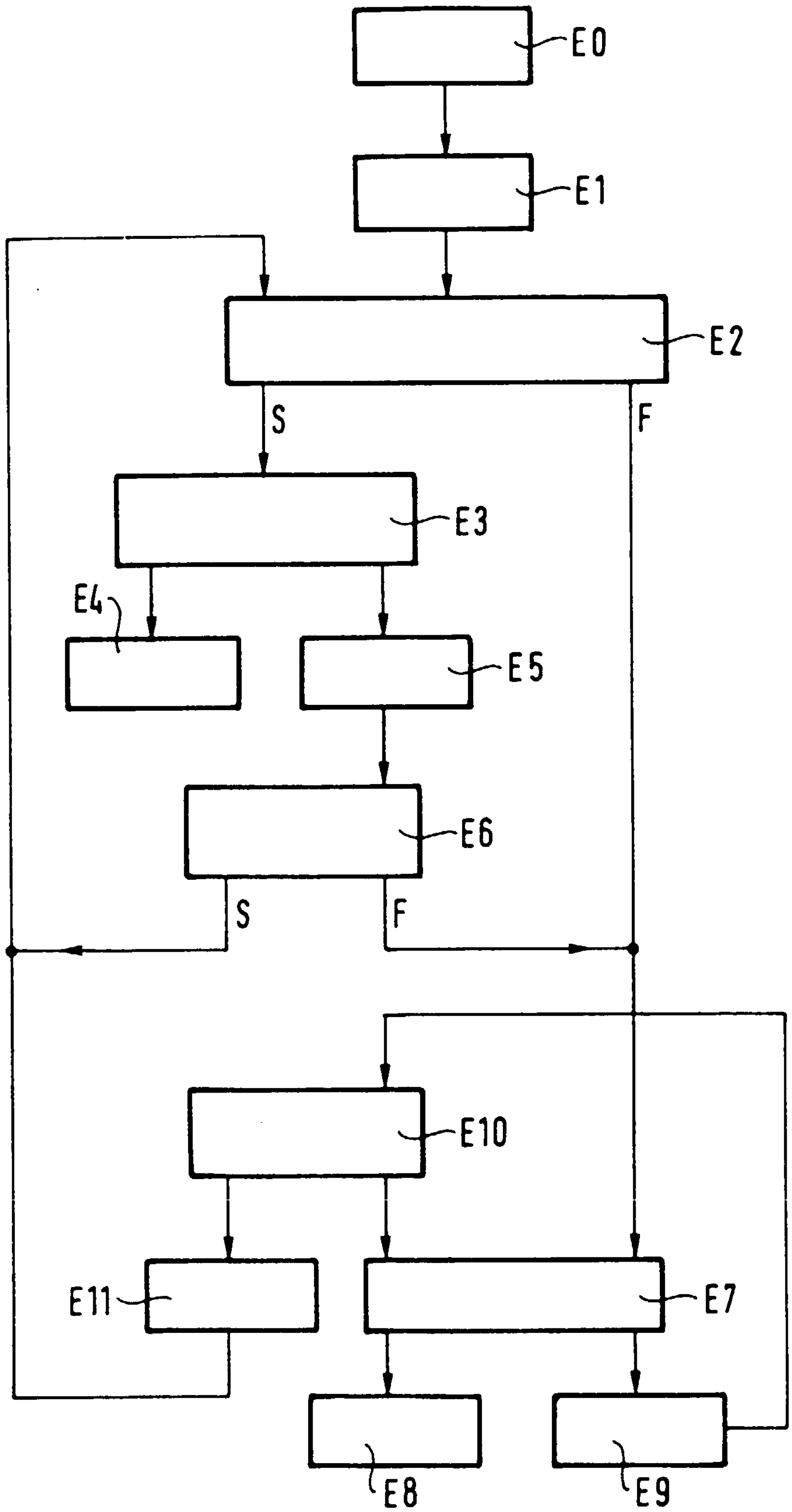

FIG.8

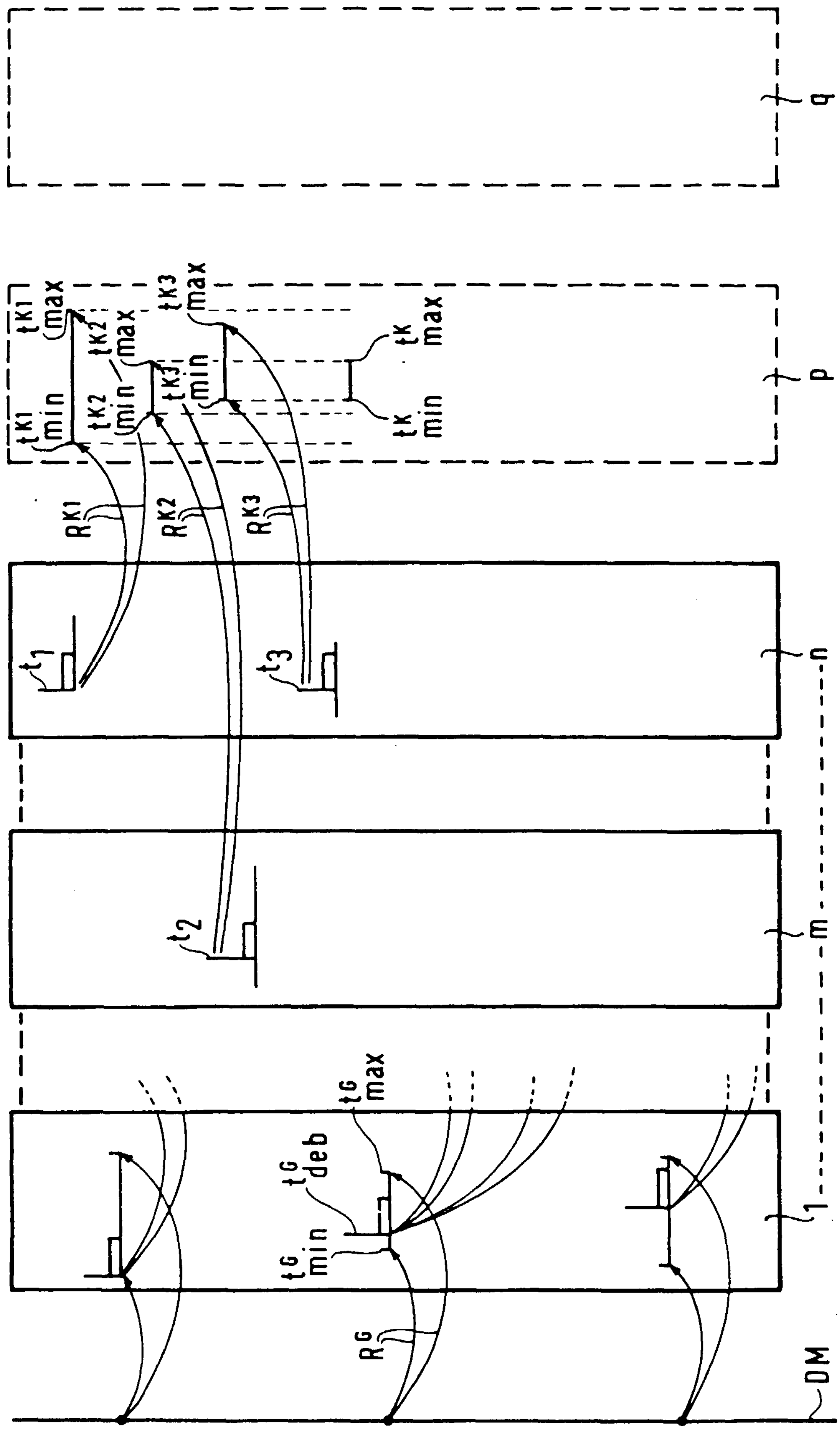
q
p
n
m
1
DM
$t_{K1}$ min
$t_{K1}$ max
$t_{K2}$ min
$t_{K2}$ max
$t_{K3}$ min
$t_{K3}$ max
$t_K$ min
$t_K$ max
$R_{K1}$
$R_{K2}$
$R_{K3}$
$t_1$
$t_2$
$t_3$
$t_G$ min
$t_G$ deb
$t_G$ max
$R_G$

FIG.9

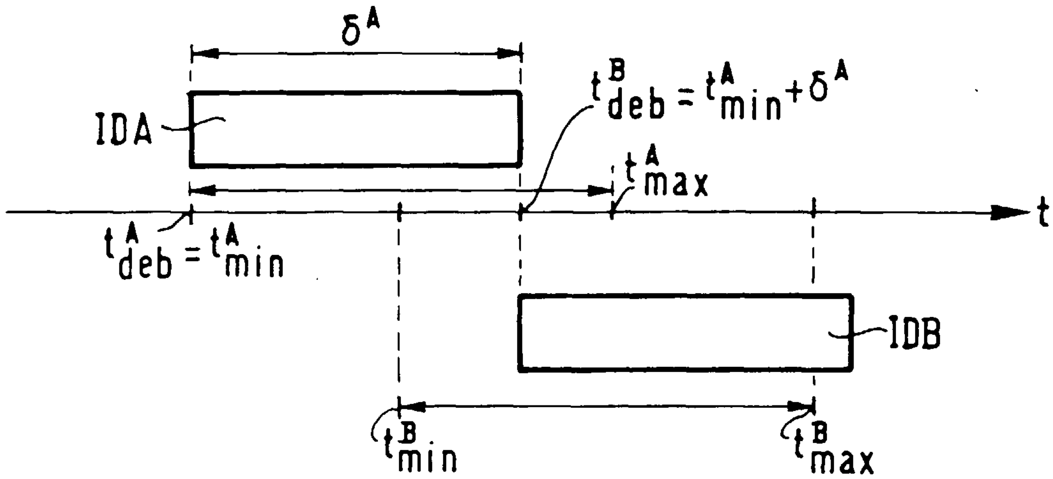
δ^A
IDA
t^B deb = t^A min + δ^A
t^A max
t
t^A deb = t^A min
IDB
t^B min
t^B max

FIG.10

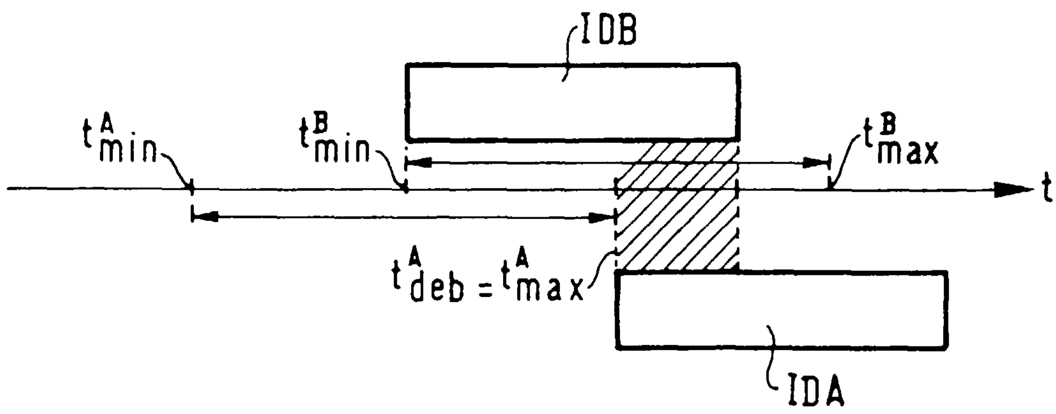
IDB
t^A min
t^B min
t^B max
t
t^A deb = t^A max
IDA

FIG.11

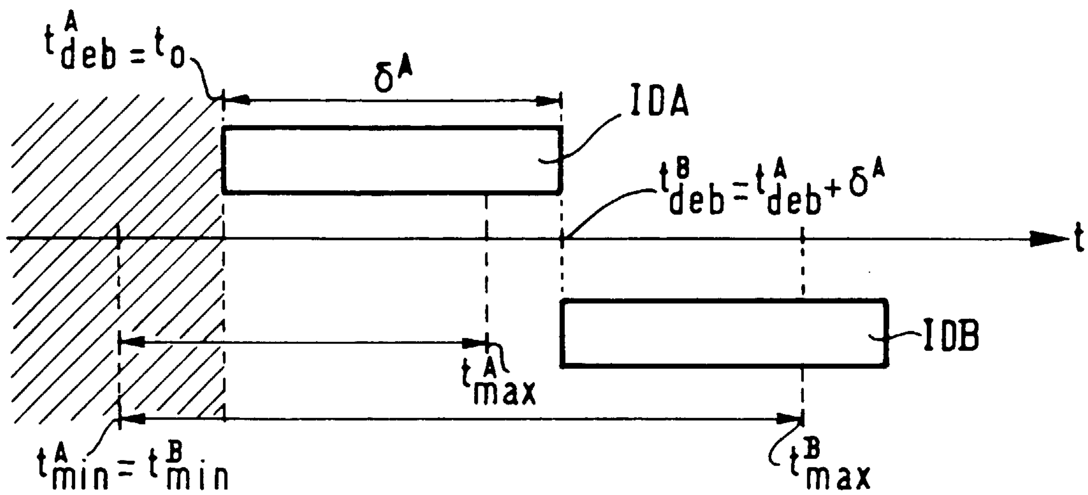
$t^A_{deb} = t_0$
$\delta^A$
IDA
$t^B_{deb} = t^A_{deb} + \delta^A$
t
IDB
$t^A_{max}$
$t^A_{min} = t^B_{min}$
$t^B_{max}$

FIG.12

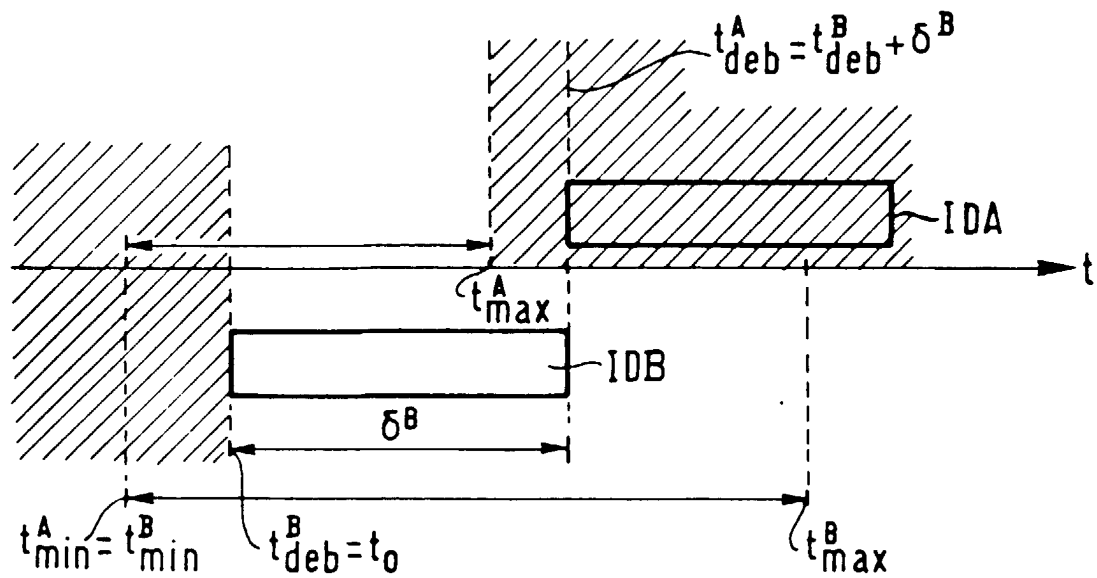
$t^A_{deb} = t^B_{deb} + \delta^B$
IDA
t
$t^A_{max}$
IDB
$\delta^B$
$t^A_{min} = t^B_{min}$
$t^B_{deb} = t_0$
$t^B_{max}$

FIG.13

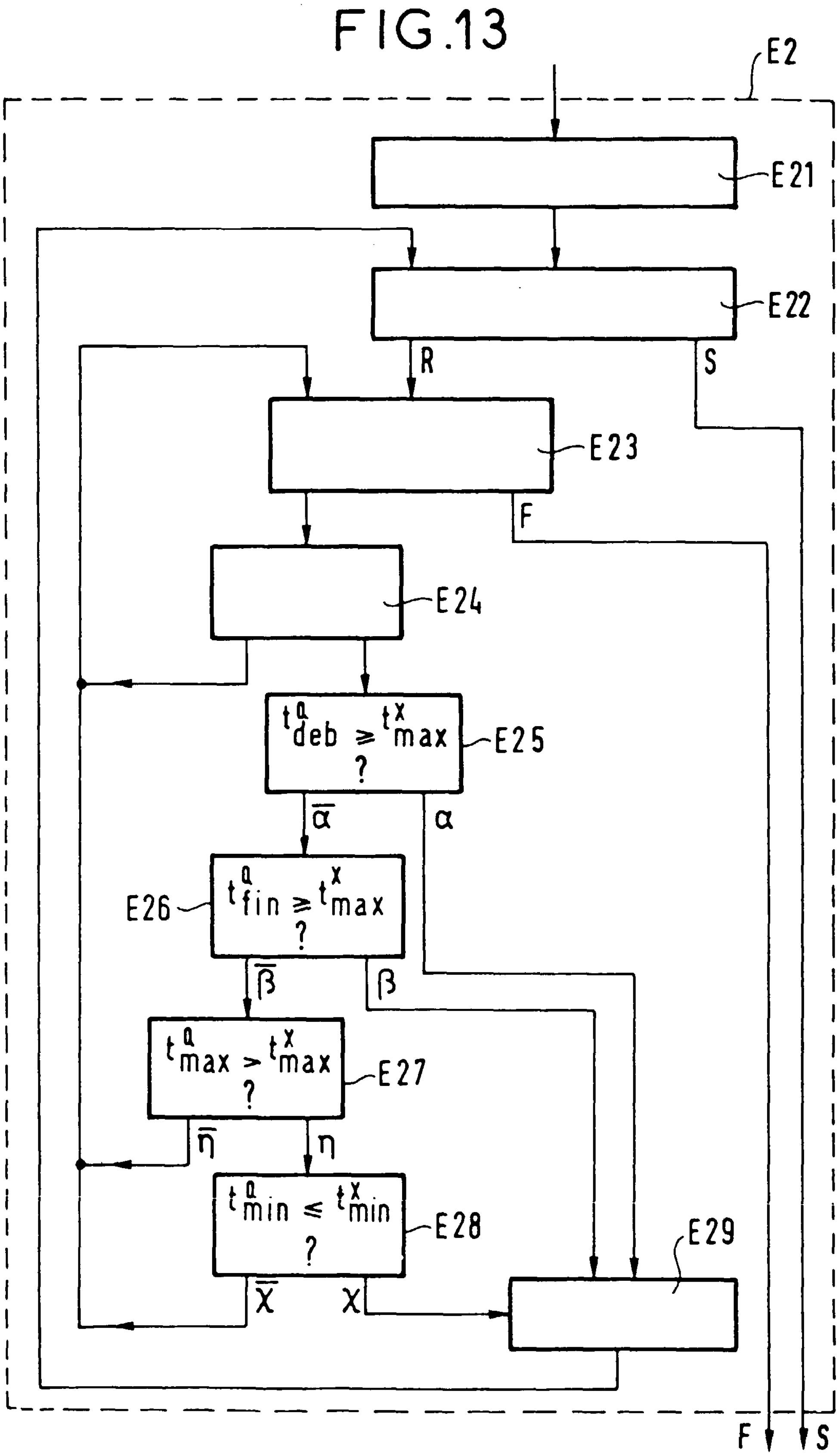
E2
E21
E22
R
S
E23
F
E24
$t^{\alpha}_{deb} \geq t^{\chi}_{max}$ ?
E25
$\overline{\alpha}$
α
E26
$t^{\alpha}_{fin} \geq t^{\chi}_{max}$ ?
$\overline{\beta}$
β
$t^{\alpha}_{max} > t^{\chi}_{max}$ ?
E27
$\overline{\eta}$
η
$t^{\alpha}_{min} \leq t^{\chi}_{min}$ ?
E28
E29
$\overline{\chi}$
χ
F
S

FIG.14

PSi = X
PSi _ 1
PSj = a

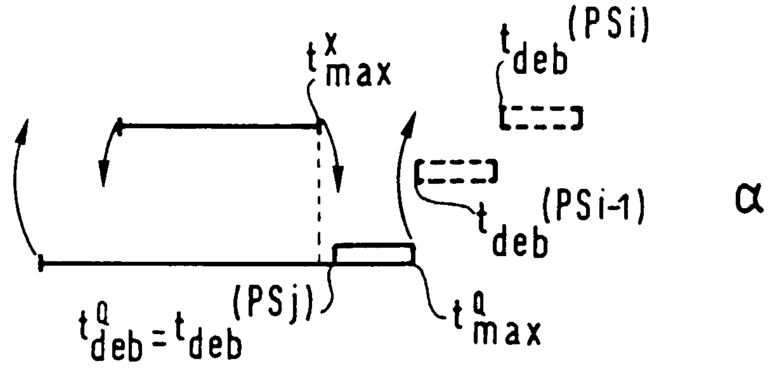


FIG.15

PSi = a
PSi _1 = X

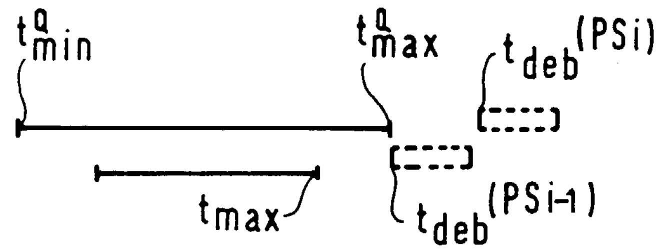


FIG.16

PSi = X
PSi _ 1
PSj = a

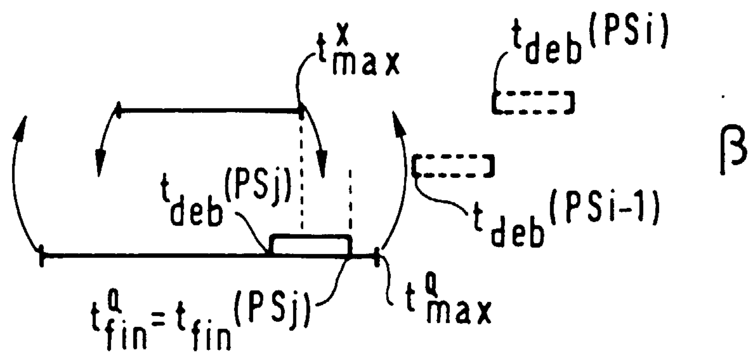


FIG.17

PSi = a
PSi _1 = X

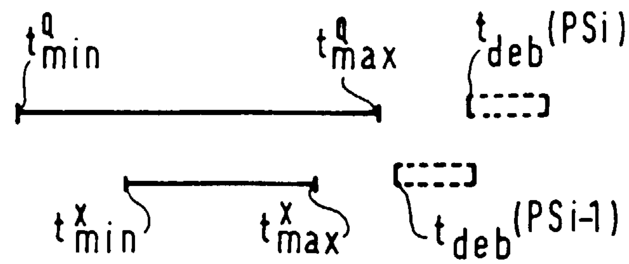

FIG.18

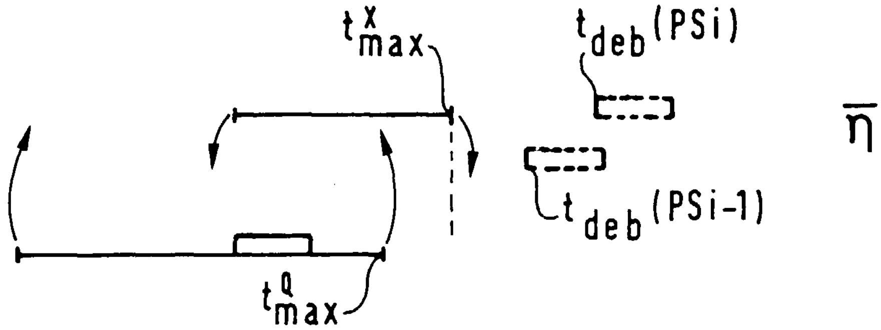


FIG.19

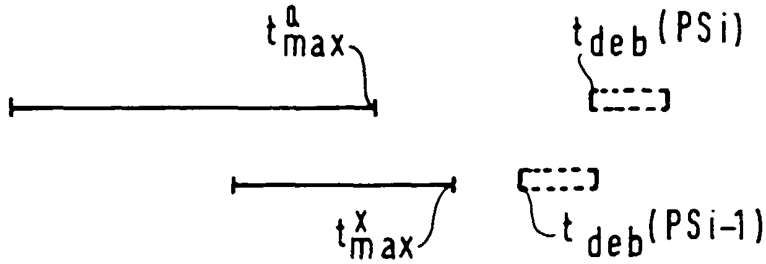


FIG.20

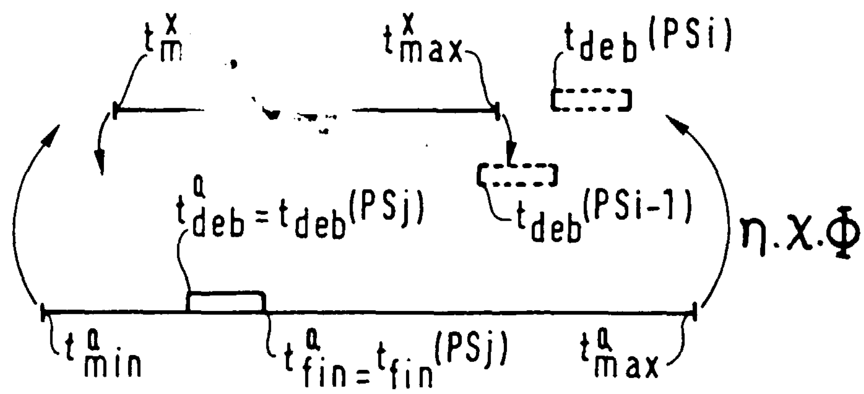


FIG.21

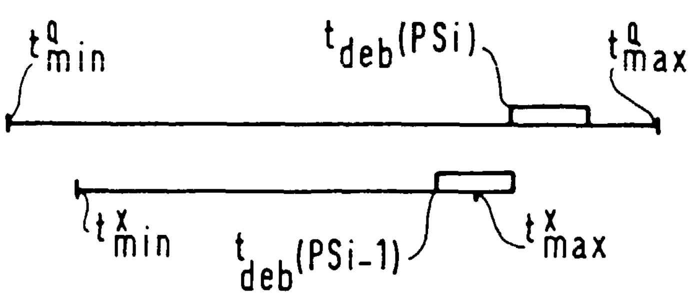

FIG.22

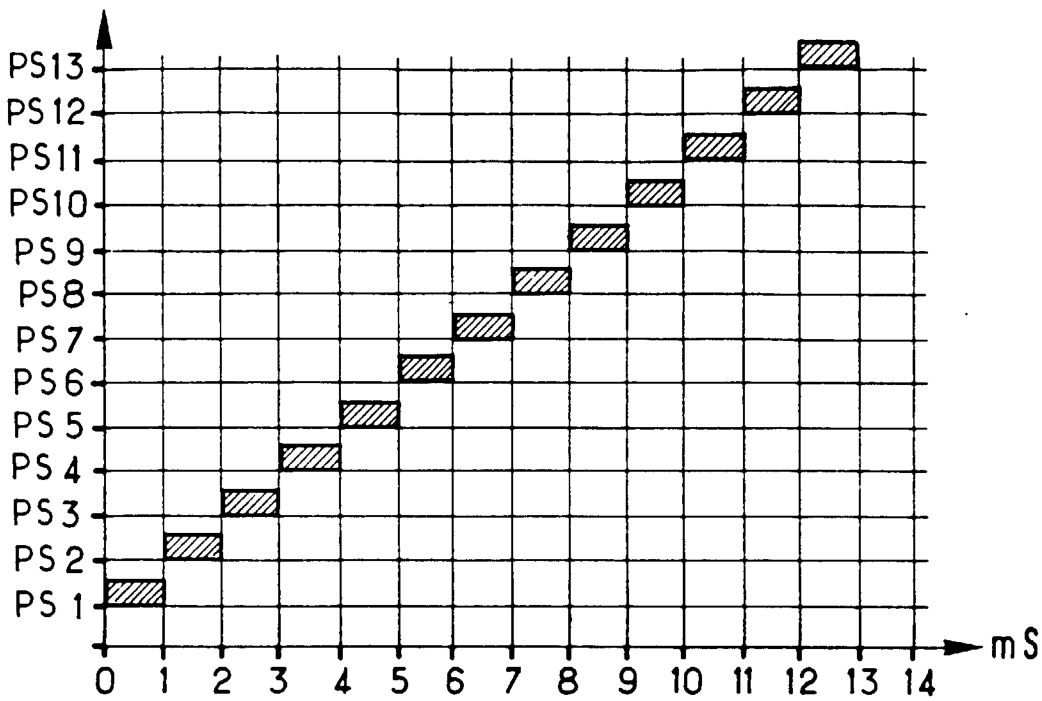
PS13
PS12
PS11
PS10
PS 9
PS8
PS7
PS6
PS 5
PS 4
PS3
PS 2
PS 1
0 1 2 3 4 5 6 7 8 9 10 11 12 13 14
mS

FIG.23

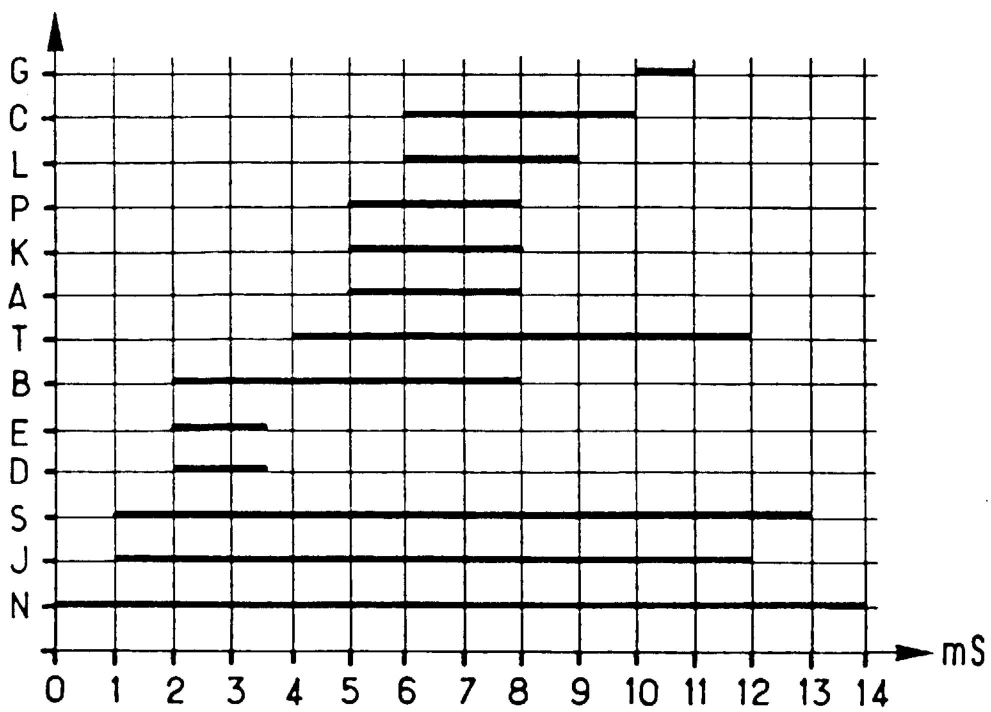
G
C
L
P
K
A
T
B
E
D
S
J
N
0 1 2 3 4 5 6 7 8 9 10 11 12 13 14
mS

FIG.24

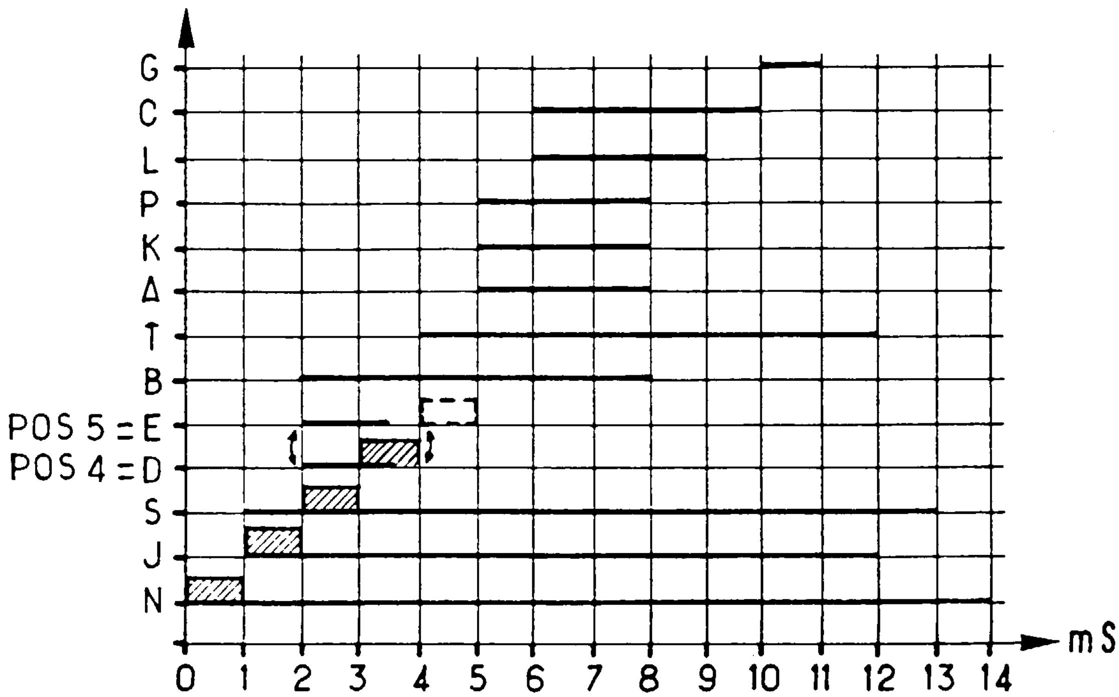

FIG.25

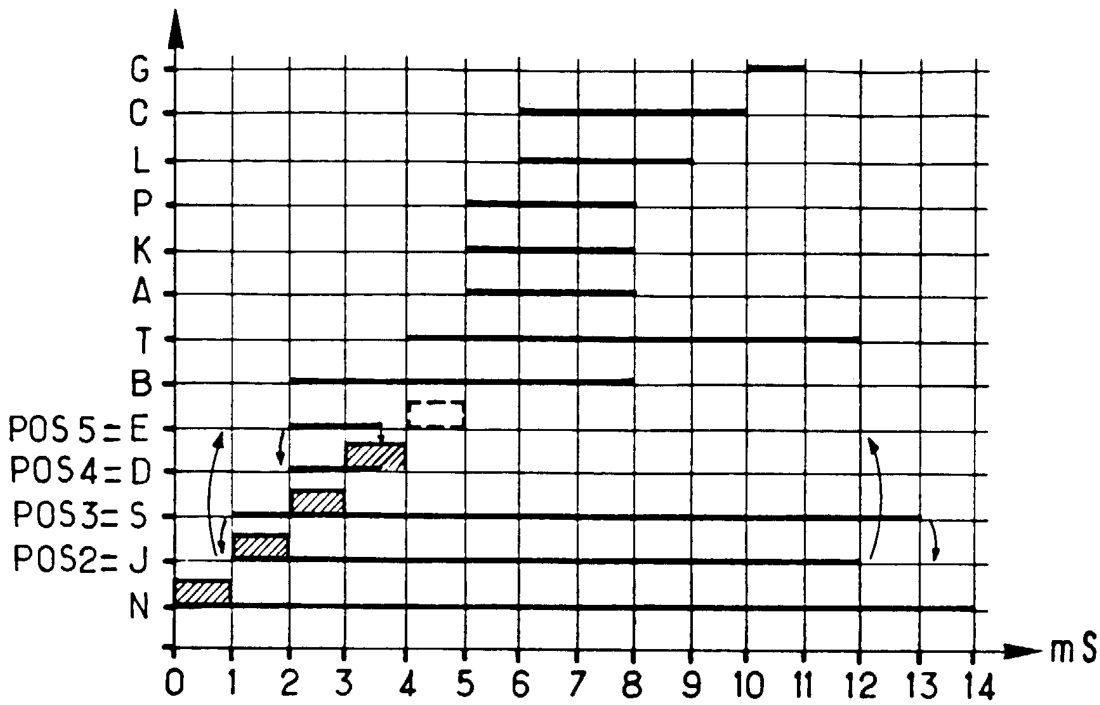
G
C
L
P
K
A
T
B
POS 5=E
POS 4=D
POS 3=S
POS 2=J
N
0 1 2 3 4 5 6 7 8 9 10 11 12 13 14
mS

FIG.26

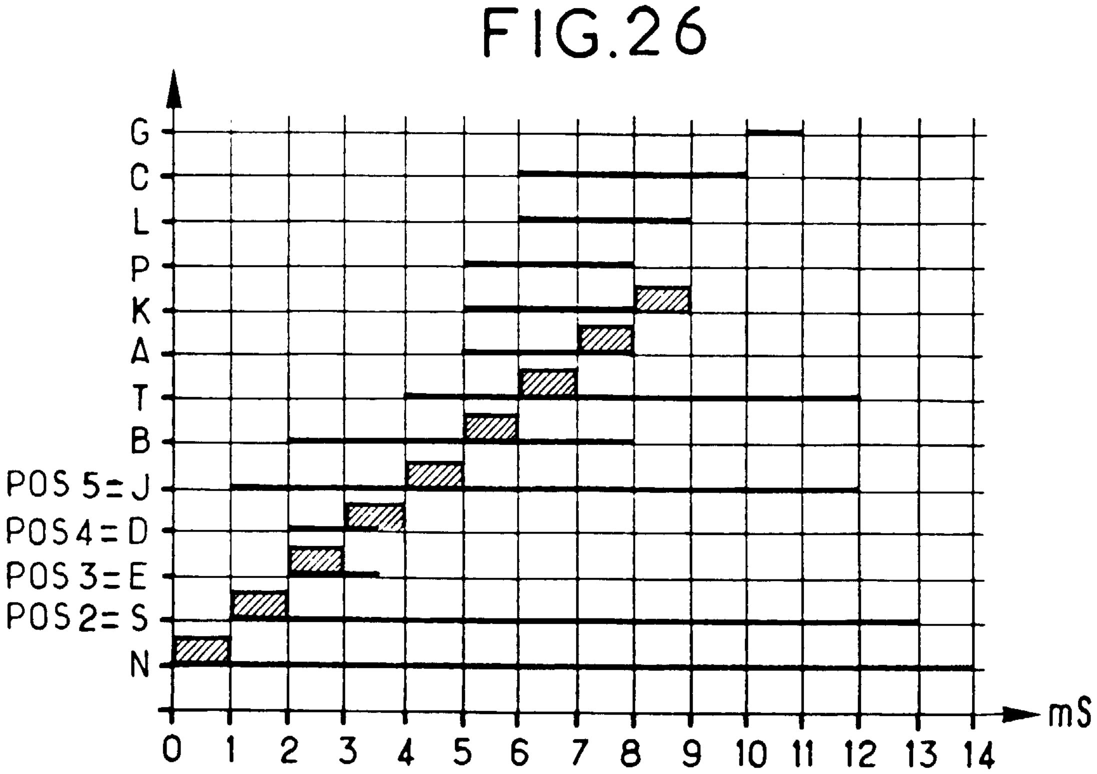
G
C
L
P
K
A
T
B
POS 5=J
POS 4=D
POS 3=E
POS 2=S
N
0 1 2 3 4 5 6 7 8 9 10 11 12 13 14
mS

FIG.27

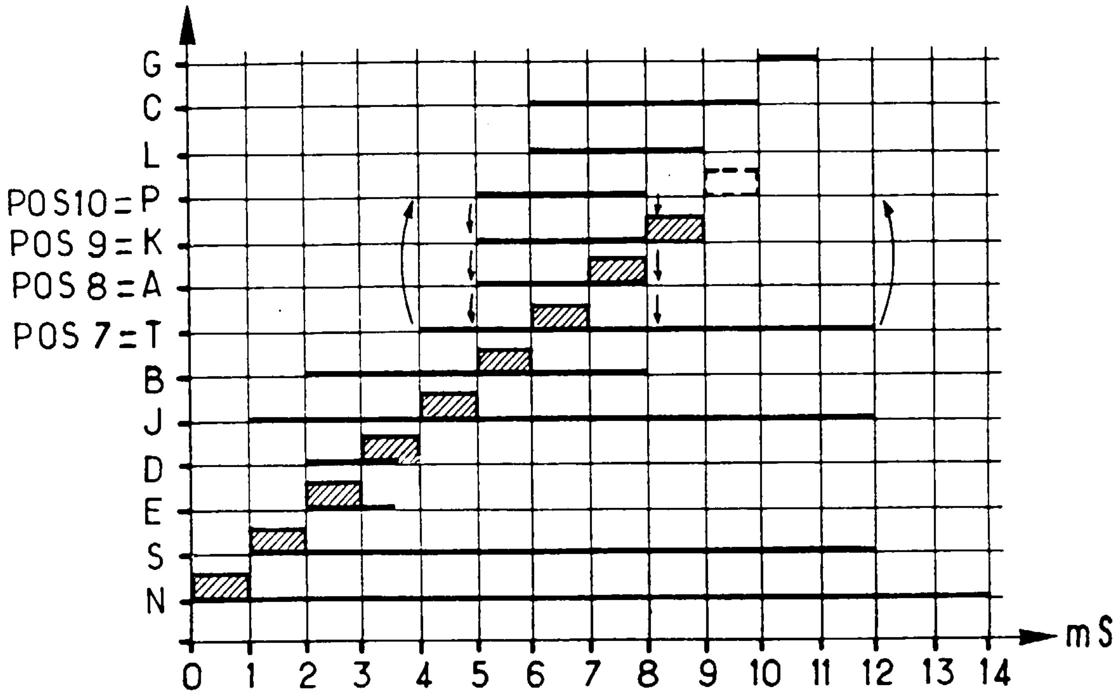
G
C
L
POS10=P
POS 9=K
POS 8=A
POS 7=T
B
J
D
E
S
N
0
1
2
3
4
5
6
7
8
9
10
11
12
13
14
mS

FIG.28

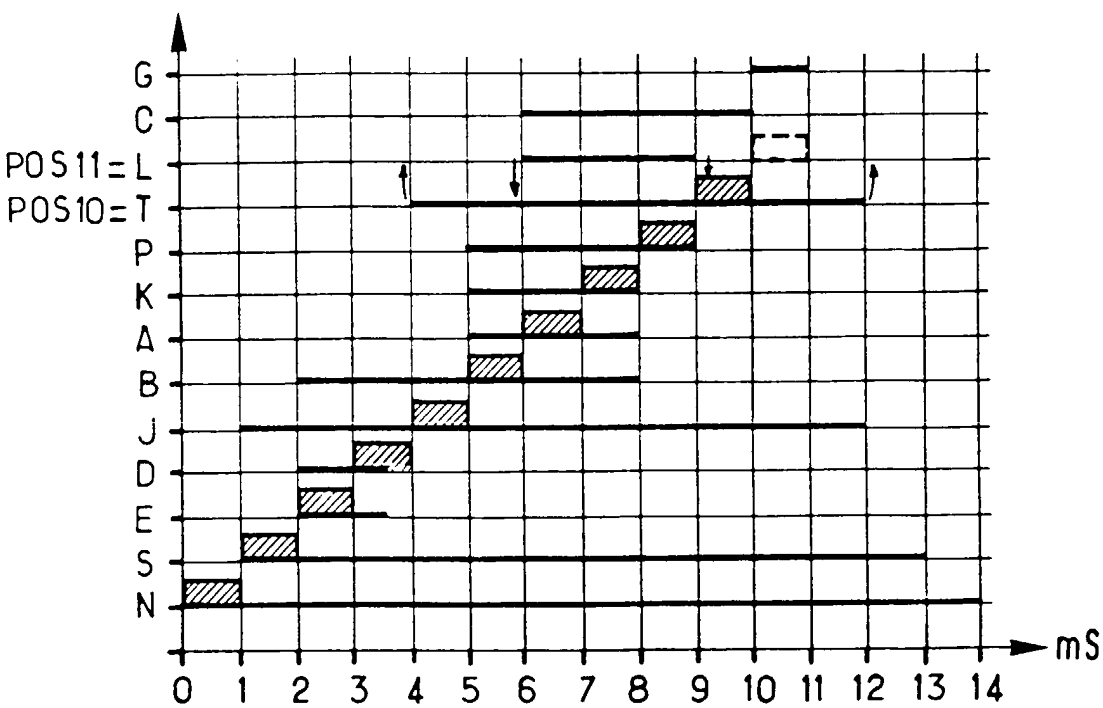
G
C
POS11=L
POS10=T
P
K
A
B
J
D
E
S
N
0
1
2
3
4
5
6
7
8
9
10
11
12
13
14
mS

FIG.29

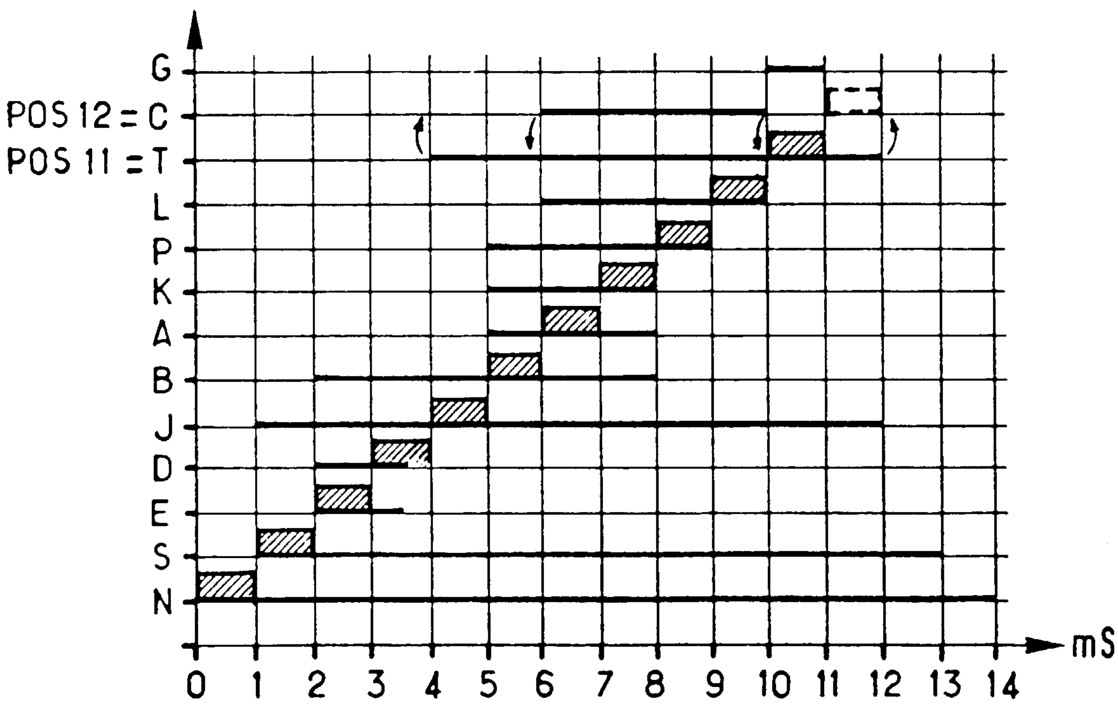

FIG.30

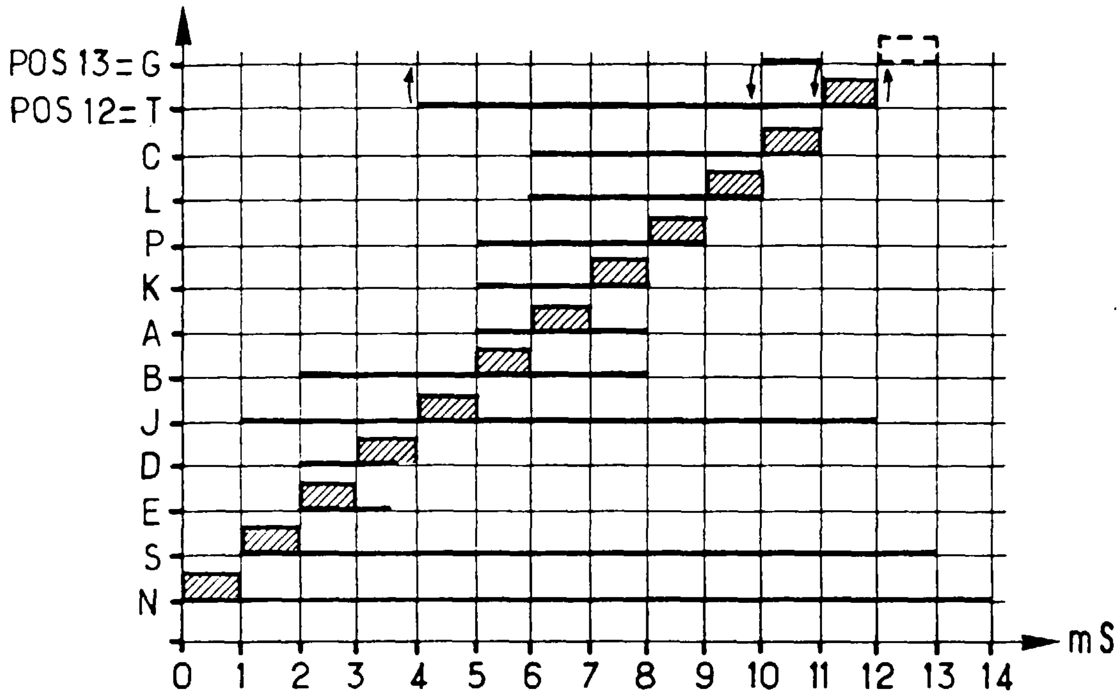
POS 13=G
POS 12=T
C
L
P
K
A
B
J
D
E
S
N
0
1
2
3
4
5
6
7
8
9
10
11
12
13
14
mS

FIG.31

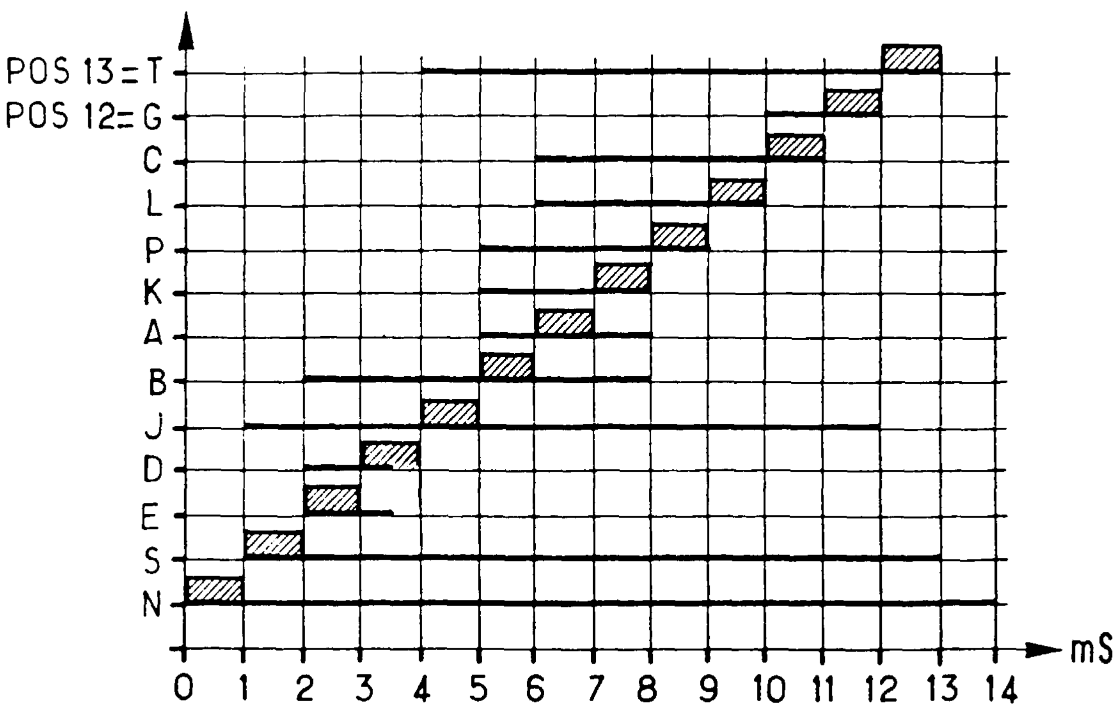
POS 13=T
POS 12=G
C
L
P
K
A
B
J
D
E
S
N
0
1
2
3
4
5
6
7
8
9
10
11
12
13
14
mS